# EUROPÄISCHE PATENTSCHRIFT

(11) **EP 2 794 430 B1**
(45) Veröffentlichungstag und Bekanntmachung des Hinweises auf die Patenterteilung: **06.04.2016**
(21) Anmeldenummer: 12740866.4
(22) Anmeldetag: 16.05.2012
(51) Int. Cl.: B65G 1/04

(54) **REGALLAGERSYSTEM UND VERFAHREN ZUM BETREIBEN DESSELBEN**
RACK STORAGE SYSTEM AND METHOD FOR OPERATING SAME
SYSTÈME D'EMMAGASINAGE À RAYONNAGES ET SON PROCÉDÉ DE FONCTIONNEMENT

(30) Priorität: 21.12.2011 AT 18642011
(43) Veröffentlichungstag der Anmeldung: 29.10.2014
(73) Patentinhaber: TGW Logistics Group GmbH, 4600 Wels (AT)
(72) Erfinder: HANSL, Rudolf, A-4020 Linz (AT); AHAMMER, Christian, A-4623 Gunskirchen (AT)
(74) Vertreter: Burger, Hannes
(86) Internationale Anmeldenummer: PCT/AT2012/050072
(87) Internationale Veröffentlichungsnummer: WO 2013/090958

(56) Entgegenhaltungen:
- WO-A1-2009/143548
- WO-A1-2011/108636
- JP-A- 8 175 620
- US-A1- 2011 008 137

## Beschreibung

Die Erfindung betrifft ein Verfahren und ein Regallagersystem mit Lagerregalen, welche in übereinander liegenden Regalebenen Lagerplätze für Ladegüter aufweisen, und einer Ladegut-Manipulationseinheit, welche zumindest eine erste Ladegut-Hebevorrichtung mit einer heb- und senkbaren Transportvorrichtung zum Einlagern und Auslagern von Ladegütern und eine erste Puffervorrichtung zum Zwischenspeichern von Ladegütern auf deren Bereitstellfördervorrichtungen aufweist, und zumindest einer zwischen den Lagerregalen und entlang der Ladegut-Hebevorrichtung sowie Puffervorrichtung verlaufenden Regalgasse, und in Längsrichtung der Regalgasse in zumindest einigen der Regalebenen verlaufenden Führungsbahnen, und zumindest einem entlang der Führungsbahnen verfahrbaren Einebenenregalbediengerät zum Transport von Ladegütern zwischen den Lagerplätzen und der Puffervorrichtung sowie einer an die Ladegut-Hebevorrichtung angeschlossenen Fördertechnik mit einer ersten Fördertechnik zum Antransport von Ladegütern zu der Ladegut-Hebevorrichtung und einer zweiten Fördertechnik zum Abtransport von Ladegütern von der Ladegut-Hebevorrichtung, wobei die Puffervorrichtung zumindest in einigen der Regalebenen ortsfest einen ersten Pufferstreckenabschnitt und zweiten Pufferstreckenabschnitt umfasst, in welchen die Bereitstellfördervorrichtungen angeordnet sind und zwischen welche die Transportvorrichtung der Ladegut-Hebevorrichtung zumindest in einigen der Regalebenen positionierbar und derart antreibbar ist, dass gleichzeitig zumindest ein erstes Ladegut vom ersten Pufferstreckenabschnitt auf die Transportvorrichtung und zumindest ein zweites Ladegut von der Transportvorrichtung auf den zweiten Pufferstreckenabschnitt förderbar ist, wobei der erste Pufferstreckenabschnitt mit den Bereitstellfördervorrichtungen und der zweite Pufferstreckenabschnitt mit den Bereitstellfördervorrichtungen relativ zur Regalgasse vor und hinter der Ladegut-Hebevorrichtung sowie seitlich neben der Regalgasse entlang der Führungsbahnen vorgesehen sind, und wobei der erste Pufferstreckenabschnitt ausschließlich einem Auslagervorgang für Ladegüter und der zweite Pufferstreckenabschnitt ausschließlich einem Einlagervorgang für Ladegüter dienen.

Die WO 2011/108636 A1 beschreibt ein gattungsgenäßes Regallagersystem mit Lagerregalen, welches in übereinander liegenden Regalebenen eine Vielzahl von Lagerplätzen für Ladegüter aufweist. Eine Ladegut-Manipulationseinheit umfasst eine Ladegut-Hebevorrichtung mit daran verfahrbaren, heb- und senkbaren Transportvorrichtungen. Zwischen den Lagerregalen ist eine Regalgasse ausgebildet, wobei in zumindest einigen der Regalebenen verlaufende Führungsbahnen für daran entlang verfahrbare (erste) Förderfahrzeuge zum Transport von Ladegütern vorgesehen sind. An der Stirnseite der einzelnen Lagerregale sind Puffervorrichtungen mit Pufferspeicherplätzen vorgesehen. Der Mast der Ladegut-Hebevorrichtung ist innerhalb der Regalgasse angeordnet, wobei die heb- und senkbaren Transportvorrichtungen jeweils in Längsrichtung der Lagerregale vor den Pufferspeicherplätzen angeordnet sind. Anschließend an die Ladegut-Manipulationseinheit kann entweder eine Fördertechnik für den An- und Abtransport der Ladegüter oder aber weitere Lagerregale angeordnet sein. Sind weitere Lagerregale vorgesehen, so ist zwischen diesen jeweils eine Regalgasse ausgebildet, wobei in zumindest einigen der Regalebenen verlaufende Führungsbahnen für daran entlang verfahrbare (zweite) Förderfahrzeuge zum Transport von Ladegütern vorgesehen sind. An der Stirnseite der weiteren Lagerregale sind Puffervorrichtungen mit Pufferspeicherplätzen vorgesehen. Die (ersten/zweiten) Förderfahrzeuge können zum Einlagern sowie Auslagern der Ladegüter in bzw. aus den Lagerregalen die entsprechenden Ladegüter von den Lagerplätzen zu einem der Pufferspeicherplätze bzw. von einem der Pufferspeicherplätze auf den dafür vorgesehenen Lagerplatz auf der jeweiligen Seite der Ladegut-Hebevorrichtung verbringen. Die Führungsbahnen enden jeweils im Bereich der Pufferspeicherplätze.

Aus der EP 2 327 643 A1, US 2011/008137 A1, WO 2011/086009 A1, JP 8-175620 A und JP 2004-123240 A ist ein Regallagersystem bekannt, welches ein Regallager mit benachbart zueinander angeordneten Lagerregalen und in Regalebenen entlang einer Regalgasse verlaufende Führungsbahnen sowie zumindest ein entlang der Führungsbahnen verfahrbares, autonomes Förderfahrzeug zum Transport der Ladegüter zu den Lagerplätzen umfasst. An einer der Regallagerseiten ist stirnseitig vor dem Regallager eine Puffervorrichtung mit Bereitstellfördervorrichtungen vorgesehen, wobei die Bereitstellfördervorrichtungen auf Höhe der Regalebenen angeordnet sind.

Ferner ist aus der EP 2 287 093 A1 ein Regallagersystem bekannt, bei dem eine Ladegut-Manipulationseinheit zwischen den stirnseitigen Regallagerseiten im Regallager integriert angeordnet ist und eine erste Ladegut-Hebevorrichtung mit einer Transportvorrichtung und eine erste Puffervorrichtung mit Bereitstellfördervorrichtungen unifasst. Führungsbahnen erstrecken sich in Längsrichtung der Regalgasse und laufen an der ersten LadegutHebevorrichtung vorbei, sodass ein Förderfahrzeug eine Position vor der Ladegut-Hebevorrichtung anfahren kann.

Ein Regallagersystem ist auch aus EP 0 733 563 A1 bekannt, welches ein Regallager mit benachbart zueinander angeordneten Lagerregalen und in Regalebenen entlang einer Regalgasse verlaufende Führungsbahnen sowie in jeder Regalebenen ein entlang der Führungsbahnen verfahrbares, autonomes Förderfahrzeug zum Transport der Ladegüter zu den Lageiplätzen umfasst. In die Lagerregale ist jeweils eine Puffervorrichtung mit Bereitstellfördervorrichtungen vorgesehen, wobei die Bereitstellfördervorrichtungen auf Höhe der Regalebenen angeordnet sind. Wie die Ein- und Auslagervorgänge für die Ladegüter vonstattengehen, ist nicht näher beschrieben.

Diese bekannten Regallagersysteme erfüllen zwar das Erfordernis an eine hohe Durchsatzleistung, sind diese jedoch sehr komplex im Aufbau und ist auch der steuerungstechnische Aufwand hoch. Damit verbunden sind auch hohe Investitionskosten.

Schließlich ist aus der WO 2009/143548 A1 ein Regallagersystem bekannt, bei dem ein Mehrebenen-Regalbediengerät zum Einlagern und Auslagern von Ladegütern eingesetzt wird.

Aufgabe der vorliegenden Erfindung ist es, ein Regallagersystem und ein Verfahren zum Betreiben desselben zu schaffen, das sich mit geringem steuerungstechnischen und mechanischen Aufwand kostengünstig realisieren und betreiben lässt.

Die Aufgabe der Erfindung wird durch die Merkmale der unabhängigen Ansprüche 1, 12, 13 und 15 gelöst, wobei die Führungsbahnen in Längsrichtung der Regalgasse entlang der Lagerregale, der Ladegut-Hebevorrichtung und der Puffervorrichtung verlaufen und wobei auch die zwischen den Fördervorrichtungen und den Pufferstreckenabschnitten angeordnete Ladegut-Hebevorrichtung mit der heb- und senkbaren Transportvorrichtung zum Einlagern und Auslagern von Ladegütern seitlich neben der Regalgasse entlang der Führungsbahnen vorgesehen ist, sodass in der jeweiligen Regalebene entweder die Bereitstellfördervorrichtung an einem Übernahmeabschnitt im ersten Pufferstreckenabschnitt oder die Bereitstellfördervorrichtung an einem Übergabeabschnitt im zweiten Pufferstreckenabschnitt über die Führungsbahnen vom Einebenenregalbediengerät zum Auslagern und Einlagern von Ladegütern anfahrbar ist, wobei die Bereitstellfördervorrichtungen im ersten Pufferstreckenabschnitt durch, die Ladegüter von dem zur Ladegut-Hebevorrichtung entfernten Übernahmeabschnitt zu einem zur Ladegut-Hebevorrichtung benachbarten Übergabeabschnitt in einer einzigen (nicht reversierbaren) Förderrichtung bewegende Staubahnen gebildet sind, wobei der Übernahmeabschnitt vom Einebenenregalbediengerät anfahrbar und ein Ladegut vom Einebenenregalbediengerät auf den Übernahmeabschnitt umsetzbar ist, und wobei die Bereitstellfördervorrichtungen im zweiten Pufferstreckenabschnitt durch, die Ladegüter von einem zur Ladegut-Hebevorrichtung benachbarten Übernahmeabschnitt zu dem zur Ladegut-Hebevorrichtung entfernten Übergabeabschnitt in einer einzigen (nicht reversierbaren) Förderrichtung bewegende Staubahnen gebildet sind, wobei der Übergabeabschnitt vom Einebenenregalbediengerät anfahrbar und ein Ladegut vom Übergabeabschnitt auf das Einebenenregalbediengerät umsetzbar ist. Demnach können die Staubahnen ohne Reversierantriebe betrieben werden, was eine Vereinfachung der Steuerung und des mechanischen Aufbaus der in einer hohen Anzahl vorliegenden Bereitstellfördervorrichtungen ermöglicht.

Es ist dabei auch von Vorteil, wenn die Puffervorrichtung zumindest in einigen der Regalebenen ortsfest einen ersten Pufferstreckenabschnitt und zweiten Pufferstreckenabschnitt umfasst, in welchen die Bereitstellfördervorrichtungen angeordnet sind und zwischen welche die Transportvorrichtung der Ladegut-Hebevorrichtung zumindest in einigen der Regalebenen derart positionierbar und (motorisch) antreibbar ist, dass gleichzeitig zumindest ein erstes Ladegut vom ersten Pufferstreckenabschnitt auf die Transportvorrichtung und zumindest ein zweites Ladegut von der Transportvorrichtung auf den zweiten Pufferstreckenabschnitt förderbar ist.

Der erste Pufferstreckenabschnitt dient einem Auslagervorgang für Ladegüter aus einem Lagerregal gemäß einem Auftrag. Dieser Auftrag kann ein oder mehrere Ladegüter umfassen. Das oder die Ladegüter werden vom ersten Pufferstreckenabschnitt über die Ladegut-Hebevorrichtung zu einer Auslager-Fördertechnik und von dieser zu einem Arbeitsplatz abgefördert. Hingegen dient der zweite Pufferstreckenabschnitt einem Einlagervorgang für Ladegüter, welche über eine Einlager-Fördertechnik von einem Arbeitsplatz angefördert werden. Die Ladegüter werden über dieselbe Ladegut-Hebevorrichtung zum zweiten Pufferstreckenabschnitt und von dort mittels des Einebenregalbediengerätes in das Lagerregal gefördert.

In vorteilhafter Weise wird bei der Übergabe von Ladegütern zwischen dem ersten Pufferstreckenabschnitt und der Ladegut-Hebevorrichtung bzw. zwischen der Ladegut-Hebevorrichtung und dem zweiten Pufferstreckenabschnitt ein so genanntes "Doppelspiel" realisiert. Unter "Doppelspiel" wird die gleichzeitige Manipulation bzw. Förderbewegung eines "auszulagernden" Ladegutes und eines "einzulagernden" Ladegutes verstanden. Es können aber auch gleichzeitig mehrere "auszulagernden" Ladegüter und mehrere "einzulagernden" Ladegüter manipuliert werden. Bevorzugt entspricht die Anzahl an "auszulagernden" Ladegütern der Anzahl an "einzulagernden" Ladegütern und kann zwischen einem Ladegut, zwei, drei oder vier Ladegütern variieren. Dementsprechend kann auch die Aufnahmekapazität von Ladegütern auf der Transportvorrichtung sowie dem der Ladegut-Hebevorrichtung benachbarten Übergabeabschnitt festgelegt werden. Mit den beschriebenen Maßnahmen wird eine hohe Durchsatzleistung erreicht.

Wird ausschließlich eine Ladegut-Hebevorrichtung eingesetzt, so sind die Bereitstellfördervorrichtungen des ersten Pufferstreckenabschnittes und Bereitstellfördervorrichtungen des zweiten Pufferstreckenabschnittes relativ zur Regalgasse vor und hinter der Ladegut-Hebevorrichtung und seitlich neben der Führungsbahn angeordnet. Das Einebenenregalbediengerät kann dabei wahlweise durch einen Materialflussrechner gesteuert, entweder im ersten Pufferstreckenabschnitt einen Übernahmeabschnitt zur Abgabe eines auszulagernden Ladegutes oder im zweiten Pufferstreckenabschnitt einen Übergabeabschnitt zur Aufnahme eines einzulagernden Ladegutes anfahren.

Der modulare Aufbau der Ladegut-Manipulationseinheit ermöglicht eine einfache Skalierbarkeit der Anlagenleistung in kleinen Stufen zwischen einer Höchstdurchsatzleistung und Normaldurchsatzleistung. Somit ist das Regallagersystem einfach für unterschiedliche Anwendungszwecke und ohne Umbau der Lagerkapazität konfigurierbar. Die Anlagenleistung kann flexibel mit tatsächlichem Geschäft des Kunden mitwachsen.

Die Ladegut-Manipulationseinheit ist aus einfachen, standardisierten Bereitstellfördervorrichtungen und der Ladegut-Hebevorrichtung gebildet, sodass der Investitionsaufwand gegenüber den aus dem Stand der Technik bekannten Regallagersystemen beträchtlich niedriger ist.

Es ist aber auch von Vorteil, wenn die Ladegut-Manipulationseinheit ferner eine zweite Ladegut-Hebevorrichtung mit einer heb- und senkbaren Transportvorrichtung zum Einlagern und Auslagern von Ladegütern und eine zweite Puffervorrichtung zum Zwischenspeichern von Ladegütern auf deren Bereitstellfördervorrichtungen aufweist, welche entlang der Regalgasse angeordnet ist und wobei an die zweite Ladegut-Hebevorrichtung eine Fördertechnik mit einer ersten Fördertechnik zum Antransport von Ladegütern zu der Ladegut-Hebevorrichtung und einer zweiten Fördertechnik zum Abtransport von Ladegütern von der Ladegut-Hebevorrichtung angeschlossen ist und wobei die Puffervorrichtung zumindest in einigen der Regalebenen ortsfest einen ersten Pufferstreckenabschnitt und zweiten Pufferstreckenabschnitt umfasst, in welchen die Bereitstellfördervorrichtungen angeordnet sind und zwischen welche die Transportvorrichtung der Ladegut-Hebevorrichtung zumindest in einigen der Regalebenen derart positionierbar und (motorisch) antreibbar ist, dass gleichzeitig zumindest ein erstes Ladegut vom ersten Pufferstreckenabschnitt auf die Transportvorrichtung und zumindest ein zweites Ladegut von der Transportvorrichtung auf den zweiten Pufferstreckenabschnitt förderbar ist, wobei der erste Pufferstreckenabschnitt mit den Bereitstellfördervorrichtungen und der zweite Pufferstreckenabschnitt mit den Bereitstellfördervorrichtungen relativ zur Regalgasse vor und hinter der Ladegut-Hebevorrichtung sowie seitlich neben der Regalgasse entlang der Führungsbahnen vorgesehen sind und der erste Pufferstreckenabschnitt ausschließlich einem Auslagervorgang für Ladegüter und der zweite Pufferstreckenabschnitt ausschließlich einem Einlagervorgang für Ladegüter dienen, wobei die Bereitstellfördervorrichtungen im ersten Pufferstreckenabschnitt durch, die Ladegüter von einem zur Ladegut-Hebevorrichtung entfernten Übernahmeabschnitt zu einem zur Ladegut-Hebevorrichtung benachbarten Übergabeabschnitt in einer einzigen (nicht reversierbaren) Förderrichtung bewegende Staubahnen gebildet sind, wobei der Übernahmeabschnitt vom Einebenenregalbediengerät anfahrbar und ein Ladegut vom Einebenenregalbediengerät auf den Übernahmeabschnitt umsetzbar ist, und wobei die Bereitstellfördervorrichtungen im zweiten Pufferstreckenabschnitt durch, die Ladegüter von einem zur Ladegut-Hebevorrichtung benachbarten Übernahmeabschnitt zu einem zur Ladegut-Hebevorrichtung entfernten Übergabeabschnitt in einer einzigen (nicht reversierbaren) Förderrichtung bewegende Staubahnen gebildet sind, wobei der Übergabeabschnitt vom Einebenenregalbediengerät anfahrbar und ein Ladegut vom Übergabeabschnitt auf das Einebenenregalbediengerät umsetzbar ist.

Die Anordnung von einem ersten Pufferstreckenabschnitt und zweiten Pufferstreckenabschnitt jeweils beidseits zur Regalgasse ist im Hinblick auf Ausfallsicherheit (Redundanz) vorteilhaft. Liegt an einer der Ladegut-Hebevorrichtungen eine Störung vor, kann der Betrieb, daher das Auslagern und Einlagern von Ladegütern, über die eine funktionstüchtige Ladegut-Hebevorrichtung dennoch aufrecht erhalten bleiben. Eine Änderung des Steuerungsablaufes oder von Förderrichtungen und des Förderflusses beim Ein- bzw. Auslagern der Ladegüter an der funktionstüchtigen Ladegut-Hebevorrichtung ist nicht notwendig.

Das Einebenenregalbediengerät kann außerdem bei einem Auslagervorgang durch einen Materialflussrechner gesteuert, wahlweise im ersten Pufferstreckenabschnitt entweder der linken Regalgassenseite oder rechten Regalgassenseite einen Übernahmeabschnitt zur Abgabe eines auszulagernden Ladegutes anfahren. Dadurch ist eine Sequenzbildung in der Auslagerreihenfolge der Ladegüter möglich.

Andererseits kann das Einebenenregalbediengerät bei einem Einlagervorgang durch einen Materialflussrechner gesteuert, wahlweise im zweiten Pufferstreckenabschnitt entweder der linken Regalgassenseite oder rechten Regalgassenseite einen Übergabeabschnitt zur Übernahme eines einzulagernden Ladegutes anfahren.

Außerdem ist bei vergleichsweise niedrigem Investitionsaufwand für das Regallagersystem eine hohe Durchsatzleistung möglich.

Sind die Förderrichtungen der Bereitstellfördervorrichtungen auf der linken Regalgassenseite und der rechten Regalgassenseite entgegengesetzt, kann das Einebenenregalbediengerät in der ersten Halteposition vor den senkrecht zur Regalgasse einander gegenüberliegenden Übernahme- und Übergabeabschnitten (45, 50) der Pufferstreckenabschnitte (41b, 42a) und/oder in der zweiten Halteposition vor den senkrecht zur Regalgasse einander gegenüberliegenden Übergabe- und Übernahmeabschnitten (50, 45) der Pufferstreckenabschnitten (42b, 41a) wechselweise ein erstes Ladegut abgeben und ein zweites Ladegut aufnehmen. Die Ladegut-Hebevorrichtungen sind dabei zumindest um eine Gassenbreite voneinander distanziert aufgestellt und sind spiegelbildlich einander gegenüberliegend angeordnet.

Eine vorteilhafte Ausbildung der Erfindung liegt auch darin, wenn die Staubahnen jeweils zwischen dem Übernahmeplatz und dem Übergabeplatz zumindest einen Pufferabschnitt ausbilden. Dadurch können so genannte "Schieflasten" vermieden werden. Unter "Schieflasten" versteht man die "ungleichmäßige" Verteilung von Aufträgen zwischen mehreren Regalebenen. Werden beispielweise 10 Artikel und somit 10 Ladegüter (Lagerbehälter) zu einem Auftrag benötigt, die nicht in mehreren Regalebenen verteilt sind, sondern in einer einzigen Regalebene, so muss ein Einebenenregalbediengerät den Auslagervorgang von 10 Ladegütern vornehmen und dementsprechend mehrmals zwischen dem Regallager und der Ladegut-Manipulationseinheit hin- und herfahren. Sind nun entsprechend dimensionierte Pufferabschnitte an den Bereitstellfördervorrichtungen vorgesehen, kann bei "Schieflast" dennoch eine gleichmäßige bzw. kontinuierliche Auslagerung von Ladegütern erfolgen. Bevorzugt sind zwei oder drei Pufferplätze für Ladegüter vorgesehen.

Sind die Ladegut-Hebevorrichtungen zumindest um eine Gassenbreite voneinander distanziert aufgestellt und in Richtung der Regalgasse axial versetzt angeordnet, kann mit einem ersten Einebenenregalbediengerät die erste Ladegut-Hebevorrichtung und mit dem zweiten Einebenenregalbediengerät die zweite Ladegut-Hebevorrichtung gleichzeitig bedient werden.

Es ist auch von Vorteil, wenn die Transportvorrichtung der Ladegut-Hebevorrichtung zwischen den einander gegenüberliegenden Fördervorrichtungen derart positionierbar und (motorisch) antreibbar ist, dass gleichzeitig zumindest ein erstes Ladegut von der ersten Fördervorrichtung auf die Transportvorrichtung und zumindest ein zweites Ladegut von der Transportvorrichtung auf die zweite Fördervorrichtung förderbar ist. Gemäß der Erfindung wird bei der Übergabe von Ladegütern zwischen der ersten Fördervorrichtung und der Transportvorrichtung bzw. zwischen der Transportvorrichtung und der zweiten Fördervorrichtung ein so genanntes "Doppelspiel" realisiert, wie oben beschrieben. Bevorzugt entspricht die Anzahl an "auszulagernden" Ladegütern der Anzahl an "einzulagernden" Ladegütern und kann zwischen einem Ladegut, zwei, drei oder vier Ladegütern variieren. Dementsprechend kann auch die Aufnahmekapazität von Ladegütern auf der Transportvorrichtung sowie dem der Ladegut-Hebevorrichtung benachbarten Übergabeabschnitt (46') an der ersten Fördervorrichtung und Übernahmeabschnitt (45') an der zweiten Fördervorrichtung festgelegt werden. Mit den beschriebenen Maßnahmen wird eine hohe Durchsatzleistung erreicht.

Es kann auch vorgesehen sein, dass die erste Fördervorrichtung zum Antransport von Ladegütern zur Ladegut-Hebevorrichtung in übereinander liegenden Fördertechnikebenen und parallel zur Regalgasse verlaufende Förderabschnitte umfasst, welche über einen Umsetzheber miteinander verbunden sind. Dadurch kann eine hohe Lagerkapazität im Regallager und eine kontinuierliche Bereitstellung von Ladegütern an einem Übergabeabschnitt (46') an der ersten Fördervorrichtung sichergestellt werden. Der Umsetzheber kann im unteren Höhenbereich (Bodenbereich) des Regallagers oder im oberen Höhenbereich des Regallagers angeordnet werden. Auch können zwei Umsetzheber verwendet werden, wovon der erste Umsetzheber im unteren Höhenbereich (Bodenbereich) des Regallagers und der zweite Umsetzheber im oberen Höhenbereich des Regallagers angeordnet werden.

Von Vorteil ist auch eine Ausbildung der Erfindung, bei der die Fördertechnik eine an die jeweilige Ladegut-Hebevorrichtung angeschlossene erste Fördervorrichtung zum Antransport von Ladegütern zur Ladegut-Hebevorrichtung und eine zweite Fördervorrichtung zum Abtransport von Ladegütern von der Ladegut-Hebevorrichtung und eine in der Regalgasse verlaufende Bereitstellungsbahn sowie eine Ausschleusvorrichtung zum Transport von Ladegütern von der Bereitstellungsbahn auf die erste Fördervorrichtung umfasst. Die Bereitstellungsbahn, Ausschleusvorrichtung und/oder Fördervorrichtungen können in einer einzigen Höhenebene oder in unterschiedlichen Höhenebenen liegen. Dadurch kann eine einfache Fördertechnik aufgebaut und eine kontinuierliche Bereitstellung von Ladegütern an einem Übergabeabschnitt (46') an der ersten Fördervorrichtung sichergestellt werden.

Eine Platz sparende Anordnungen der Ladegut-Manipulationseinheit wird erreicht, wenn diese stirnseitig an die Lagerregale anschließt öder in dem Regallager integriert ist.

Eine vorteilhafte Ausbildung der Erfindung liegt auch darin, wenn die erste Fördervorrichtung zum Antransport von Ladegütern zur ersten Ladegut-Hebevorrichtung und die zweite Fördervorrichtung zum Abtransport von Ladegütern von der ersten Ladegut-Hebevorrichtung an einen ersten Arbeitsplatz und die erste Fördervorrichtung zum Abtransport von Ladegütern zur zweiten Ladegut-Hebevorrichtung und die zweite Fördervorrichtung zum Abtransport von Ladegütern von der zweiten Ladegut-Hebevorrichtung an einen zweiten Arbeitsplatz angeschlossen sind. Durch die vollständige Entkopplung der Einlager- und Auslagervorgänge für Arbeitsplätze kann der erste Arbeitsplatz unabhängig vom zweiten Arbeitsplatz arbeiten. Es werden die Ladegüter direkt vom Regallager über die erste Ladegut-Hebevorrichtung und die zweite Fördertechnik zum ersten Arbeitsplatz bzw. über die zweite Ladegut-Hebevorrichtung und die zweite Fördertechnik zum zweiten Arbeitsplatz gefördert und nach einem abgeschlossenen Arbeitsprozess, beispielsweise einem Kommissioniervorgang oder Beladevorgang eines Ladungsträgers, direkt vom ersten Arbeitsplatz über die erste Fördertechnik und die erste Ladegut-Hebevorrichtung bzw. vom zweiten Arbeitsplatz über die erste Fördertechnik und die zweite Ladegut-Hebevorrichtung gefördert. Dadurch wird der Förderfluss der Ladegüter getrennt und entstehen unabhängig voneinander wirkende Förderkreisläufe an Ladegütern.

Die Aufgabe der Erfindung wird auch dadurch gelöst, dass das erste Ladegut durch das Einebenenregalbediengerät von einem Lagerplatz zu einem zur Ladegut-Hebevorrichtung entfernten Übernahmeabschnitt auf der Bereitstellfördervorrichtung im ersten Pufferstreckenabschnitt und vom Übernahmeabschnitt in Förderrichtung zu einem der Ladegut-Hebevorrichtung benachbarten Übergabeabschnitt gefördert wird, und dass das zweite Ladegut von der Transportvorrichtung zu einem der Ladegut-Hebevorrichtung benachbarten Übernahmeabschnitt und von diesem in Förderrichtung zu einem zur Ladegut-Hebevorrichtung entfernten Übergabeabschnitt auf der Bereitstellfördervorrichtung im zweiten Pufferstreckenabschnitt und danach durch das Einebenenregalbediengerät vom Übergabeabschnitt übernommen und zu einem Lagerplatz gefördert wird.

Die Aufgabe der Erfindung wird aber ebenso durch dadurch gelöst, dass die Führungsbahnen in Längsrichtung der Regalgasse entlang der Lagerregale, der Ladegut-Hebevorrichtung und der Puffervorrichtung verlaufen und dass auch die zwischen den Fördervorrichtungen und den Pufferstreckenabschnitten angeordnete Ladegut-Hebevorrichtung mit der heb- und senkbaren Transportvorrichtung zum Einlagern und Auslagern von Ladegütern seitlich neben der Regalgasse entlang der Führungsbahnen vorgesehen ist, sodass in der jeweiligen Regalebene entweder die Bereitstellfördervorrichtung an einem Übernahmeabschnitt im ersten Pufferstreckenabschnitt oder die Bereitstellfördervorrichtung an einem Übergabeabschnitt im zweiten Pufferstreckenabschnitt über die Führungsbahnen vom Einebenenregalbediengerät zum Auslagern und Einlagern von Ladegütern anfahrbar ist, wobei die Bereitstellfördervorrichtungen im ersten Pufferstreckenabschnitt durch, die Ladegüter von dem zur Ladegut-Hebevorrichtung entfernten Übernahmeabschnitt zu einem zur Ladegut-Hebevorrichtung benachbarten Übergabeabschnitt in einer einzigen (nicht reversierbaren) Förderrichtung bewegende Staubahnen gebildet sind, wobei der Übernahmeabschnitt vom Einebenenregalbediengerät anfahrbar und ein Ladegut vom Einebenenregalbediengerät auf den Übernahmeabschnitt umsetzbar ist, und wobei die Bereitstellfördervorrichtungen im zweiten Pufferstreckenabschnitt durch, die Ladegüter von einem zur Ladegut-Hebevorrichtung benachbarten Übernahmeabschnitt zu dem zur Ladegut-Hebevorrichtung entfernten Übergabeabschnitt in einer einzigen (nicht reversierbaren) Förderrichtung bewegende Staubahnen gebildet sind, wobei der Übergabeabschnitt vom Einebenenregalbediengerät anfahrbar und ein Ladegut vom Übergabeabschnitt auf das Einebenenregalbediengerät umsetzbar ist.

Dabei umfasst die Puffervorrichtung zumindest in einigen der Regalebenen ortsfest einen ersten Püfferstreckenabschnitt und zweiten Pufferstreckenabschnitt, in welchen die Bereitstellfördervorrichtungen angeordnet sind und zwischen welche die Transportvorrichtung der Ladegut-Hebevorrichtung zumindest in einigen der Regalebenen positionierbar ist. Der erste Pufferstreckenabschnitt dient ausschließlich einem Auslagervorgang für Ladegüter aus einem Lagerregal gemäß einem Auftrag. Dieser Auftrag kann ein oder mehrere Ladegüter umfassen. Das oder die Ladegüter werden vom ersten Pufferstreckenabschnitt über die Ladegut-Hebevorrichtung zu einer Auslager-Fördertechnik und von dieser zu einem Arbeitsplatz abgefördert. Hingegen dient der zweite Pufferstreckenabschnitt ausschließlich einem Einlagervorgang für Ladegüter, welche über eine Einlager-Fördertechnik von einem Arbeitsplatz angefördert werden. Die Ladegüter werden über dieselbe Ladegut-Hebevorrichtung zum zweiten Pufferstreckenabschnitt und von dort mittels des Einebenregalbediengerätes in das Lagerregal gefördert.

Es ist aus steuerungstechnischer und konstruktiver Sicht von wesentlichem Vorteil, wenn innerhalb der Puffervorrichtung über alle Regalebenen, in denen die ersten Bereitstellfördervorrichtungen und zweiten Bereitstellfördervorrichtungen angeordnet sind, einerseits alle ersten Bereitstellfördervorrichtungen in eine einzige Förderrichtung und andererseits auch alle zweiten Bereitstellfördervorrichtungen in eine einzige Förderrichtung angetrieben werden, wobei die Förderrichtungen von sämtlichen ersten und zweiten Bereitstellfördervorrichtungen gleich ist.

Weitere vorteilhafte Ausgestaltungen und Maßnahmen, insbesondere die Manipulation der Ladegüter mit "Doppelspiel", die Anordnung einer zweiten Ladegut-Hebevorrichtung und dgl. sind oben beschrieben. Dieses "Doppelspiel" wird zur Leistungssteigerung angewendet, versteht sich aber, dass dieses gemäß dieser Lösung der Aufgabe nicht zwingenderweise realisiert werden muss.

Zum besseren Verständnis der Erfindung wird diese anhand der nachfolgenden Figuren näher erläutert.

Es zeigen jeweils in stark schematisch vereinfachter Darstellung:
- Fig. 1: einen Ausschnitt eines Regallagersystems in einer ersten Ausführung mit einem Regallager und einer Ladegut-Manipulationseinheit in Draufsicht;
- Fig. 2: einen Ausschnitt eines Regallagers und einer Förderfahrzeug-Hebevorrichtung in Draufsicht;
- Fig. 3: eine Seitenansicht auf die Ladegut-Manipulationseinheit gemäß der Linie III in Fig. 1;
- Fig. 4: eine Stirnansicht auf das Regallager und ein Förderfahrzeug;
- Fig. 5: eine vergrößerte Darstellung eines Teilabschnittes aus Fig. 4;
- Fig. 6: einen Ausschnitt eines Regallagersystems in einer zweiten Ausführung mit einem Regallager und einer Ladegut-Manipulationseinheit in Draufsicht;
- Fig. 7: eine Seitenansicht auf die Ladegut-Manipulationseinheit gemäß der Linie VII in Fig. 6;
- Fig. 8 bis 12: einen Einlagervorgang und Auslagervorgang in aufeinander folgenden Verfahrensschritten unter Berücksichtigung einer hohen Durchsatzleistung, in Seitenansicht auf die Ladegut-Manipulationseinheit gemäß der Linie VIII in Fig. 6;
- Fig. 13 und 14: einen Einlagervorgang und Auslagervorgang in aufeinander folgenden Verfahrensschritten unter Berücksichtigung einer Sequenzbildung, in Seitenansicht auf die Ladegut-Manipulationseinheit gemäß der Linie VIII in Fig. 6;
- Fig. 15: einen Ausschnitt eines Regallagersystems in einer dritten Ausführung mit einem Regallager und einer Ladegut-Manipulationseinheit in Seitenansicht;
- Fig. 16: eine Draufsicht auf eine Fördertechnikebene der Fördertechnik zum Antransport von Ladegütern und zum Abtransport von Ladegütern;
- Fig. 17: eine Draufsicht auf Bereitstellfördervorrichtungen und die Ladegut-Hebevorrichtung auf einem Höhenniveau einer Regalebene.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Auch wird darauf hingewiesen, dass aus Gründen der besseren Übersicht in den Fig. nur einige wenige Regalebenen 16 dargestellt wurden. Vielmehr weisen die nachfolgend beschriebenen Regällagersysteme in der Regel zwischen 15 bis 25 Regalebenen auf.

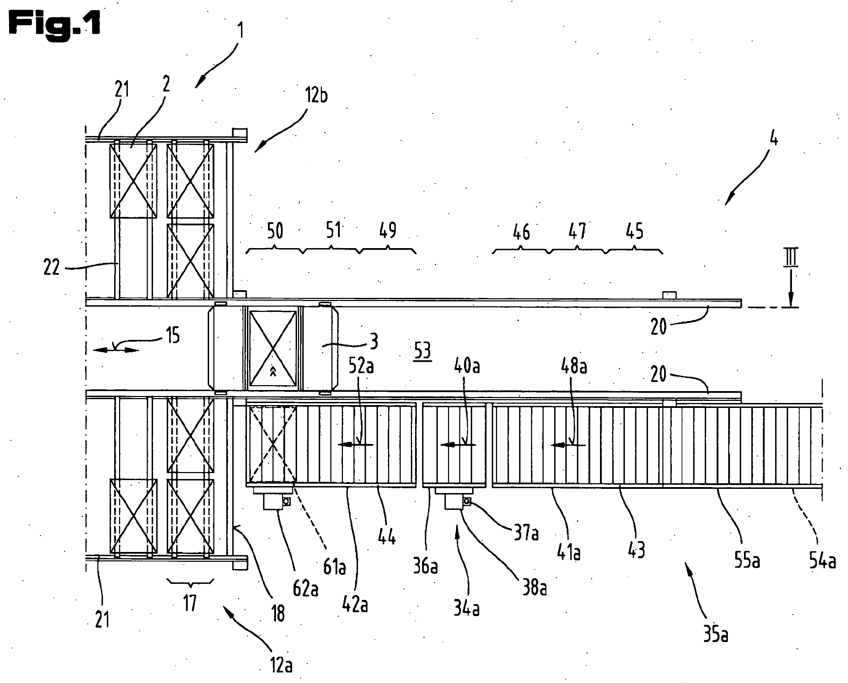

In den Fig. 1 bis 5 ist eine erste Ausführung eines Regallagersystems gezeigt, welches ein Regallager 1 für Ladegüter 2, zumindest ein selbstfahrendes, autonomes Förderfahrzeug 3, eine vollautomatisierte Ladegut-Manipulationseinheit 4 und gegebenenfalls eine Förderfahrzeug-Hebevorrichtung 5 umfasst.

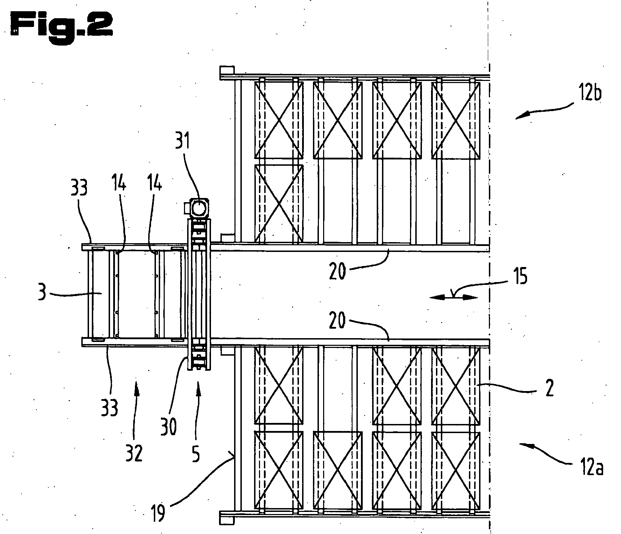

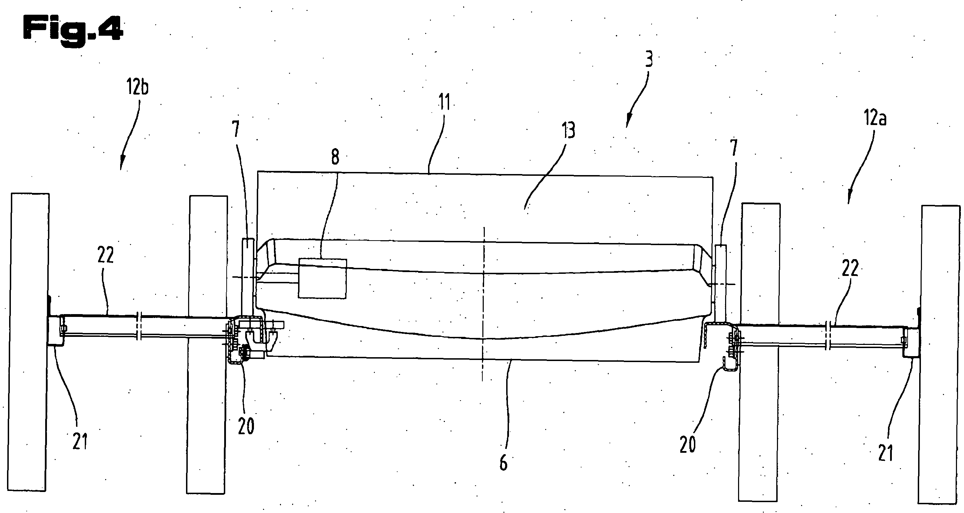

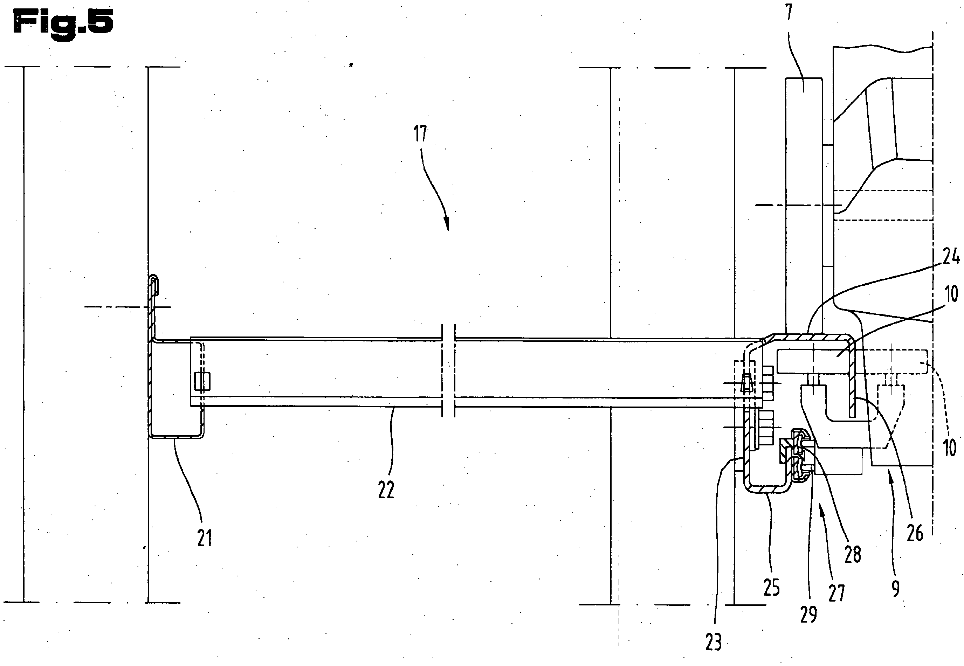

Das Förderfahrzeug 3 ist ein Einebenenregalbediengerät (Shuttle) und umfasst, wie in den Fig. 4 und 5 ersichtlich, einen Grundrahmen 6, Laufräder 7, einen Fahrmotor 8 zum Antrieb mindestens eines Laufrades 7, eine Führungsvorrichtung 9 mit Führungsräder 10 sowie eine Lastaufnahmevorrichtung 11, beispielweise zur Einlagerung und Auslagerung von Ladegütern 2 in ein bzw. aus einem Lagerregal 12a, 12b des Regallagers 1. Die Lastaufnahmevorrichtung 11 umfasst nach gezeigter Ausführung nach beiden Seiten relativ zum Förderfahrzeug 3 ausfahrbare Teleskoparme 13 und jeweils an diesen angeordnete Mitnehmer 14 (Fig. 2) zum Erfassen eines Ladegutes 2. Eine solche Lastaufnahmevorrichtung 11 ist beispielsweise aus der US 2005/0095095 A1 oder EP 0 647 575 A1 bekannt, und kann aufgrund der kompakten Bauweise der Teleskoparme 13 und der zuverlässigen Funktionsweise mit Vorteil eingesetzt werden. Die Ladegüter 2 sind beispielsweise Behälter, Kartonagen, Tablare und dgl. oder ein Warenartikel.

Das Regallager 1 weist in einem Abstand parallel angeordnete Lagerregale 12a, 12b auf, zwischen denen sich zumindest eine Regalgasse 15 erstreckt und welche in übereinander liegenden Regalebenen 16 jeweils nebeneinander vorgesehene Lagerplätze 17 für die Ladegüter 2 ausbilden. Das Regallager 1 bildet stirnseitig einander gegenüberliegend eine erste Regallagerseite 18 und eine zweite Regallagerseite 19 aus. Natürlich kann das Regallager 1 eine Vielzahl von Lagerregalen 12a, 12b und zwischen einigen benachbarten Lagerregale 12a ,12b einige Regalgassen 15 umfassen.

Die Lagerregale 12a, 12b umfassen jeweils der Regalgasse 15 benachbarte, vertikale vordere Regalsteher und von der Regalgasse 15 entfernte, vertikale hintere Regalsteher, wobei sich zwischen den vorderen Regalstehern in der jeweiligen Regalebene 18 zumindest eine horizontale vordere Längstraverse 20 und zwischen den hinteren Regalstehern in der jeweiligen Regalebene 16 zumindest eine horizontale hintere Längstraverse 21 erstreckt. Die Längstraversen 20, 21 sind über Befestigungsmittel, beispielweise Schrauben, mit den Regalstehern verbunden.

Die vorderen Längstraversen 20 verlaufen in Längsrichtung der Regalgasse 15 (X-Richtung), wobei die in der jeweiligen Regalebene 16 paarweise einander gegenüberliegenden Längstraversen 20 eine Führungsbahn bilden, entlang welcher das Förderfahrzeug 3 bewegt werden kann.

Die Längstraversen 20, 21 der jeweiligen Regalebene 16 sind über die Lagerplätze 17 bzw. Lagerfläche bildende Querträger 22 miteinander verbunden. Die Querträger 22 erstrecken sich zwischen den Längstraversen 20, 21 in Tiefenrichtung eines Regalfaches (Z-Richtung).

Nach gezeigter Ausführung bilden die Lagerregale 12a, 12b in den Regalebenen 16 jeweils nebeneinander und hintereinander vorgesehene Lagerplätze 17 für die Ladegüter 2 aus, sodass in Tiefenrichtung der Lagerregale 12a, 12b zwei Ladegüter 2 abgestellt werden können, daher eine so genannte "doppelttiefe" Lagerung möglich ist. Andererseits ist es auch möglich, dass die Lagerregale 12a, 12b in den Regalebenen 16 jeweils ausschließlich in einer Reihe nebeneinander vorgesehene Lagerplätze 17 für die Ladegüter 2 ausbilden, sodass in Tiefenrichtung der Lagerregale 12a, 12b nur ein Ladegut 2 abgestellt werden kann, daher eine so genannte "einfachtiefe" Lagerung möglich ist.

Die vordere Längstraverse 20, siehe Fig. 5, umfasst einen Profilsteg 23, einen von diesem abgewinkelten horizontalen oberen Profilflansch 24, einen vom Profilsteg 23 abgewinkelten unteren Profilflansch 25 und einen vom oberen Profilflansch 24 abgewinkelten Führungssteg 26. Der obere Profilflansch 24 bildet eine horizontale Lauffläche für die Laufräder 7 des Förderfahrzeuges 3 und der Führungssteg 26 einander gegenüberliegende Führungsflächen für die Führungsräder 10 der Führungsvorrichtung 9 aus. Der untere Profilflansch 25 bildet einen horizontalen Profilschenkel und einen von diesem abgewinkelten vertikalen Profilschenkel aus. Eine der paarweise einander gegenüberliegenden, vorderen Längstraversen 20 der jeweiligen Regalebene 16 ist mit einem elektrischen Energieversorgungssystem 27, insbesondere einer Schleifleitungsanordnung ausgestattet. Diese ist am vertikalen Profilschenkel des unteren Profilflansches 25 befestigt, wie in Fig. 5 näher dargestellt.

Das elektrische Energieversorgungssystem 27 erstreckt sich im Wesentlichen über die gesamte Länge der vorderen Längstraversen 20, sodass das mobile Förderfahrzeug 3 während der Fahrbewegung entlang der Führungsbahnen zwischen dem Regallager 1 und der Ladegut-Manipulationseinheit 4 mit dem Energieversorgungssystem 27 mit elektrischer Energie versorgt wird. Dabei wird die elektrische Energie für den Fahrmotor 8 des Förderfahrzeuges 3 und/oder Steuersignale für das Förderfahrzeug 3 mittels an der Längstraverse 20 angeordneter Schleifleitungen 28 zugeführt und die zugeführte Energie ist über am Förderfahrzeug 3 (Fig. 5) angeordnete Stromabnehmer 29, insbesondere Schleifkontakte, beispielsweise federbetätigte Schleifkohlen, aus den Schleifleitungen 28 abnehmbar.

Aus wirtschaftlichen Überlegungen, kann es sich auch als günstig erweisen, wenn ein Förderfahrzeug 3 auf mehreren Regalebenen 16 verwendet wird. Beispielsweise wird für je drei Regalebenen 16 ein Förderfahrzeug 3 eingesetzt. Ist im Gegensatz dazu in jeder Regalebene 16 ein Förderfahrzeug 3 vorgesehen, so ist eine Förderfahrzeug-Hebevorrichtung 5, wie sie in Fig. 2 gezeigt ist, nicht notwendig.

Ist die Anzahl der Förderfahrzeuge 3 geringer als die Anzahl der Regalebenen 16, so wird die Förderfahrzeug-Hebevorrichtung 5 eingesetzt, welche ein Förderfahrzeug 3 auf unterschiedliche Regalebenen 16 aufgeben und von unterschiedlichen Regalebenen 16 aufnehmen kann.

Die Förderfahrzeug-Hebevorrichtung 5 (Umsetzvorrichtung) ist auf der zweiten Regallagerseite 19 stirnseitig vor dem Regallager 1 angeordnet und umfasst einen Führungsrahmen 30 und eine über einen Hubantrieb 31 am Führungsrahmen 30 heb- und senkbare Aufnahmevorrichtung 32 für das Förderfahrzeug 3. Die Aufnahmevorrichtung 32 umfasst parallel zur Regalgasse 15 (x-Richtung) mit gegenseitigem Abstand horizontal erstreckende Längstraversen 33. Durch die Hubbewegung wird die Aufnahmevorrichtung 32 relativ zu den Regalebenen 16 in vertikaler Richtung (y-Richtung) bis zu einer von einem Rechnersystem festgelegten y-Position bewegt.

Die Ladegut-Manipulationseinheit 4, wie sie in einer ersten Ausführung in den Fig. 1 bis 3 ersichtlich ist, umfasst stirnseitig vor den Lagerregalen 12a, 12b angeordnet eine erste Ladegut-Hebevorrichtung 34a und eine erste Puffervorrichtung 35a zum Zwischenspeichern von Ladegütern 2.

Die ortsfest aufgestellte Ladegut-Hebevorrichtung 34a umfasst eine heb- und senkbare Transportvorrichtung 36a für ein Ladegut 2, wobei die Transportvorrichtung 36a auf einem über einen Hubantrieb 37a vertikal verstellbaren Hubrahmen aufgebaut sind. Nach gezeigter Ausführung ist die Transportvorrichtung 36a über den Hubrahmen auf einem ersten Mast 38a gelagert.

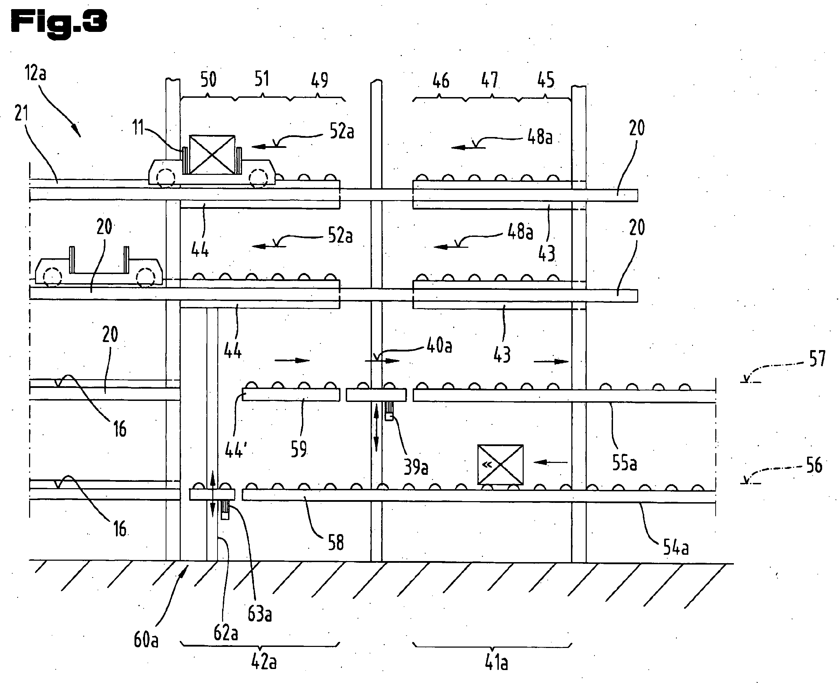

Die Transportvorrichtung 36a umfasst eine über einen Antriebsmotor 39a (Fig. 3) reversibel antreibbare Fördervorrichtung mit einer parallel zur Regalgasse 15 verlaufenden umkehrbaren Förderrichtung und kann ein Ladegut 2 aufnehmen. Ist die Transportvorrichtung 36a zwischen einander gegenüberliegenden Bereitstellfördervorrichtungen 43, 44 positioniert, wie in Fig. 1 gezeigt, so entspricht die Förderrichtung 40a den Förderrichtungen der Bereitstellfördervorrichtüngen 43, 44. Ist hingegen die Transportvorrichtung 36a zwischen einander gegenüberliegenden Fördervorrichtungen 54a, 55a positioniert, wie in Fig. 3 gezeigt, so entspricht die Förderrichtung 40a den Förderrichtungen der Fördervorrichtungen 54a, 55a. Die Fördervorrichtung ist beispielweise eine Rollenbahn oder ein Förderband und dgl.

Die ortsfest aufgestellte Puffervorrichtung 35a umfasst einen ersten Pufferstreckenabschnitt 41a und einen zweiten Pufferstreckenabschnitt 42a, wobei in jedem dieser Pufferstreckenabschnitte 41a, 42a zumindest in einigen der Regalebenen 16 übereinander Bereitstellfördervorrichtungen 43, 44 angeordnet sind.

Wie in Fig. 3 ersichtlich, sind zum Einen in den unteren beiden Regalebenen 16 des ersten Pufferstreckenabschnittes 41a und zum Anderen in der einen unteren Regalebene 16 des zweiten Pufferstreckenabschnittes 42a keine Bereitstellfördervorrichtungen 43, 44 vorgesehen, um die Anordnung einer Fördertechnik zum Antransport von Ladegütern 2 zur Ladegut-Hebevorrichtung 34a und zum Abtransport von Ladegütern 2 von der Ladegut-Hebevorrichtung 34a zu ermöglichen.

Die Bereitstellfördervorrichtungen 43 im ersten Pufferstreckenabschnitt 41a sind jeweils durch Staubahnen gebildet, welche einen Übernahmeabschnitt 45, einen Übergabeabschnitt 46 und zwischen diesen zumindest einen Pufferabschnitt 47 umfassen. Die Übernahme-, Übergabe- und Pufferabschnitte 45, 46, 47 umfassen jeweils einen einzigen Übernahme- und Übergabeplatz und zumindest einen Pufferplatz. Mittels der Staubahnen können die Ladegüter 2 von dem zur Ladegut-Hebevorrichtung 34a entfernten Übernahmeabschnitt 45 zu dem zur Ladegut-Hebevorrichtung 34a benachbarten Übergabeabschnitt 46 in einer einzigen Förderrichtung 48a gefördert werden.

Die Bereitstellfördervorrichtungen 44 im zweiten Pufferstreckenabschnitt 42a sind jeweils durch Staubahnen gebildet, welche einen Übernahmeplatz 49, einen Übergabeabschnitt 50 und zwischen diesen zumindest einen Pufferabschnitt 51 umfassen. Bevorzugt sind zwei oder drei Pufferplätze vorgesehen. Mittels der Staubahnen können die Ladegüter 2 von dem zur Ladegut-Hebevorrichtung 34a benachbarten Übernahmeabschnitt 49 zu dem zur Ladegut-Hebevorrichtung 34a entfernten Übergabeabschnitt 50 in einer einzigen Förderrichtung 52a gefördert werden.

Demnach dient die Bereitstellfördervorrichtung 43 in dem ersten Pufferstreckenabschnitte 41a einem Auslagervorgang von Ladegütern 2 und die Bereitstellfördervorrichtung 44 in dem zweiten Pufferstreckenabschnitte 42a einem Einlagervorgang von Ladegütern 2.

Die Bereitstellfördervorrichtung 43, 44 bzw. Staubahnen sind Staurollenförderer, Staugurtförderer und dgl., wobei ein Stauplatz jeweils den Übernahmeplatz 45, 49, den Übergabeplatz 46, 50 und den zumindest einen Pufferplatz 47, 51 bildet. Somit können auf einer Bereitstellfördervorrichtung 43, 44 zumindest drei Ladegüter 2, bevorzugt vier Ladegüter 2 gepuffert werden.

Wie die Fig. 1 und 3 erkennen lassen, weisen die Bereitstellfördervorrichtungen 43, 44 in den jeweiligen Regalebenen 16 eine einzige (nicht reversierbare) Förderrichtung 48a, 52a auf. Mit anderen Worten, sind die Bereitstellfördervorrichtungen 43, 44 bzw. die Staubahnen in allen Regalebenen 16, in denen sie angeordnet sind, mit einer einzigen (nicht reversierbaren) Förderrichtung 48a, 52a betrieben. Bevorzugt werden die Bereitstellfördervorrichtungen 43, 44 bzw. die Staubahnen in jeder gemeinsamen Regalebene 16, in denen sie angeordnet sind, mit einer einzigen (nicht reversierbaren) Förderrichtung 48a, 52a betrieben, wie in Fig. 1 und 3 ersichtlich von rechts nach links. Bloß die Förderrichtung 40a der Transportvorrichtung 36a ist reversierbar, wie oben beschrieben.

Wie in den Fig. 1 und 3 ersichtlich, verlaufen entlang der Ladegut-Manipulationseinheit 4 in Längsrichtung der Regalgasse 15 (X-Richtung) und in zumindest einigen der Regalebenen 16 horizontale Längstraversen 20. Die Längstraversen 20 sind mit ihrem Endabschnitt über Befestigungsmittel, beispielweise Schrauben, mit Vertikalstehern verbunden.

Andererseits kann es sich beispielweise aus fertigungstechnischen Gründen in der Herstellung der vorderen Längstraversen 20 oder aus montagetechnischen Gründen der vorderen

Längstraversen 20 und dgl. auch von Vorteil erweisen, dass in Längsrichtung der Regalgasse 15 hintereinander mehrere vordere Längstraversen 20 aneinander gereiht werden, wobei dann die Längstraversen 20 an ihren einander zugewandten Endabschnitten über eine Verbindungsvorrichtung miteinander und/oder mit den Regal- und Vertikalstehern verbunden werden. Die aneinander gereihten Längstraversen 20 haben dabei denselben Profilquerschnitt.

Die in der jeweiligen Regalebene 16 paarweise einander gegenüberliegenden Längstraversen 20 bilden eine Führungsbahn, entlang welcher das Förderfahrzeug 3 bewegt werden kann. Die Längstraversen 20 bzw. Führungsbahnen verlaufen in Längsrichtung der Regalgasse 15 (X-Richtung) entlang der Lagerregale 12a, 12b und entlang der Ladegut-Hebevorrichtung 34a und der Puffervorrichtung 35a.

Dabei ist entlang der Ladegut-Hebevorrichtung 34a und der Puffervorrichtung 35a ein Umsetzbereich 53 definiert. Das Förderfahrzeug 3 kann entlang der jeweiligen Führungsbahn geführt bewegt werden, um auszulagernde Ladegüter 2 von den Lagerplätzen 17 der Lagerregale 12a, 12b zu dem Übernahmeabschnitt 45 des ersten Pufferstreckenabschnittes 41a anzutransportieren oder einzulagernde Ladegüter 2 von dem Übergabeabschnitt 50 des zweiten Pufferstreckenabschnitte 42a zu den Lagerplätzen 17 der Lagerregale 12a, 12b abzutransportieren.

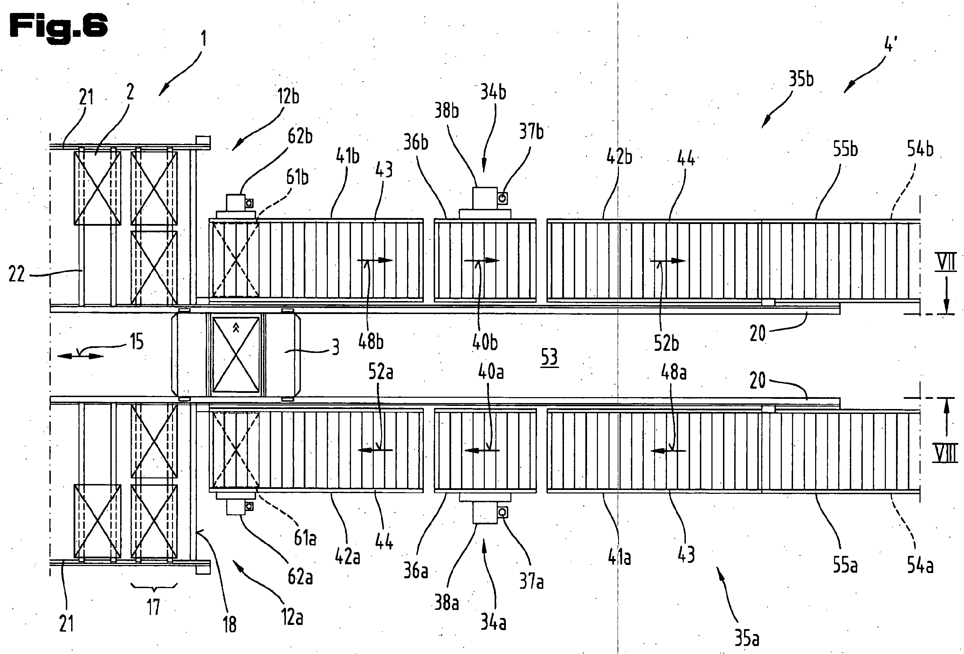

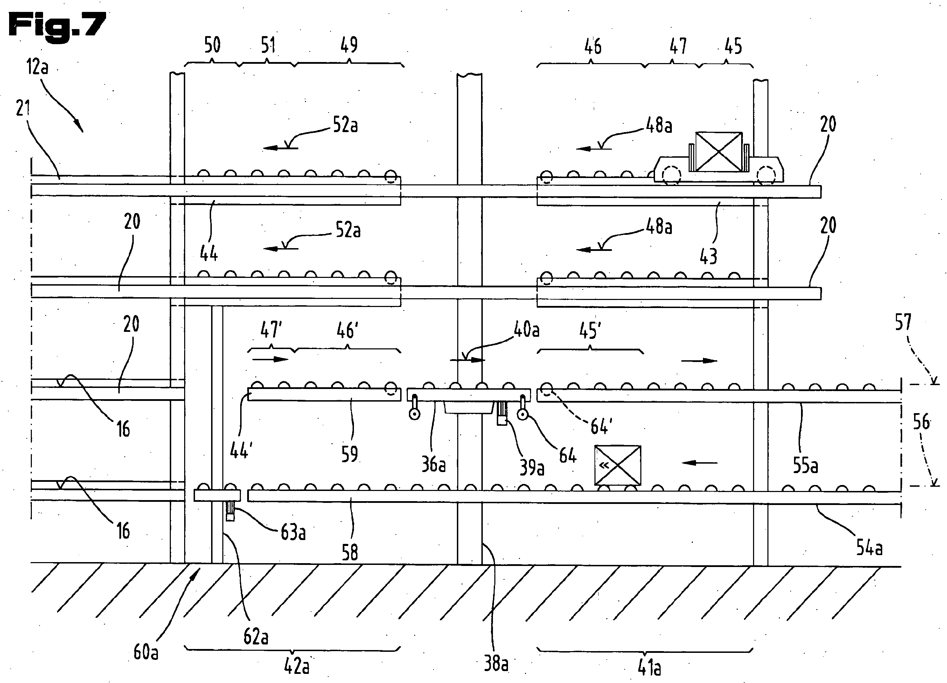

In den Fig. 6 und 7 ist eine zweite Ausführung eines Regallagersystems gezeigt, welches ein Regallager 1 für Ladegüter 2, zumindest ein selbstfahrendes, autonomes Förderfahrzeug 3, eine Ladegut-Manipulationseinheit 4' und gegebenenfalls eine Förderfahrzeug-Hebevorrichtung 5 umfasst.

Die Ladegut-Manipulationseinheit 4' umfasst stirnseitig vor den Lagerregalen 12a, 12b angeordnet eine erste Ladegut-Hebevorrichtung 34a, eine erste Puffervorrichtung 35a zum Zwischenspeichern von Ladegütern 2, eine zweite Ladegut-Hebevorrichtung 34b und eine zweite Puffervorrichtung 35b zum Zwischenspeichern von Ladegütern 2. Eine solche Ausführung eignet sich für höchste Leistungsanforderungen.

Die Ladegut-Hebevorrichtungen 34a, 34b sind nach gezeigter Ausführung vorzugsweise bei "doppelttiefer Lagerung" zur Regalgasse 15 spiegelbildlich einander gegenüberliegend aufgestellt. Andererseits ist es vorzugsweise bei einer "einfachtiefen Lagerung" auch möglich, dass die Ladegut-Hebevorrichtungen 34a, 34b einander gegenüberliegend aufgestellt, aber in Richtung der Regalgasse 15 axial zueinander versetzt sind.

Die ortsfest aufgestellten Ladegut-Hebevorrichtungen 34a, 34b umfassen jeweils eine heb- und senkbare Transportvorrichtung 36a, 36b für Ladegüter 2, wobei die erste Transportvorrichtung 36a auf einem über einen ersten Hubantrieb 37a vertikal verstellbaren Hubrahmen und eine zweite Transportvorrichtung 36b auf einem über einen zweiten Hubantrieb 37b vertikal verstellbaren Hubrahmen aufgebaut sind. Nach gezeigter Ausführung ist die erste Transportvorrichtung 36a über den Hubrahmen auf einem ersten Mast 38a und die zweite Transportvorrichtung 36b über den Hubrahmen auf einem zweiten Mast 38b gelagert. Die heb- und senkbaren Transportvorrichtungen 36a, 36b und/oder deren Fördervorrichtungen sind unabhängig voneinander ansteuerbar.

Die Transportvorrichtungen 36a, 36b umfassen jeweils eine über einen Antriebsmotor 39a, 39b (Fig. 3) reversibel antreibbare Fördervorrichtung mit einer parallel zur Regalgasse 15 verlaufenden umkehrbaren Förderrichtung 40a, 40b und können in Förderrichtung 40a, 40b hintereinander zumindest zwei Ladegüter 2 aufnehmen. Ist die Transportvorrichtung 36a, 36b zwischen einander gegenüberliegenden Bereitstellfördervorrichtungen 43, 44 positioniert, wie in Fig. 6 gezeigt, so entspricht die Förderrichtung 40a, 40b den Förderrichtungen der jeweiligen Bereitstellfördervorrichtungen 43, 44. Ist hingegen die Transportvorrichtung 36a, 36b zwischen einander gegenüberliegenden Fördervorrichtungen 54a, 55a, 54b, 55b positioniert, wie in Fig. 7 gezeigt, so entspricht die Förderrichtung 40a, 40b den Förderrichtungen der Fördervorrichtungen 54a, 55a, 54b, 55b. Die Fördervorrichtung ist beispielweise eine Rollenbahn oder ein Förderband und dgl.

Die ortsfest aufgestellten Puffervorrichtungen 35a, 35b umfassen jeweils einen ersten Pufferstreckenabschnitt 41a, 41b und einen zweiten Pufferstreckenabschnitt 42a, 42b, wobei in jedem dieser Pufferstreckenabschnitte 41a, 41b, 42a, 42b zumindest in einigen der Regalebenen 16 übereinander Bereitstellfördervorrichtungen 43, 44 angeordnet sind.

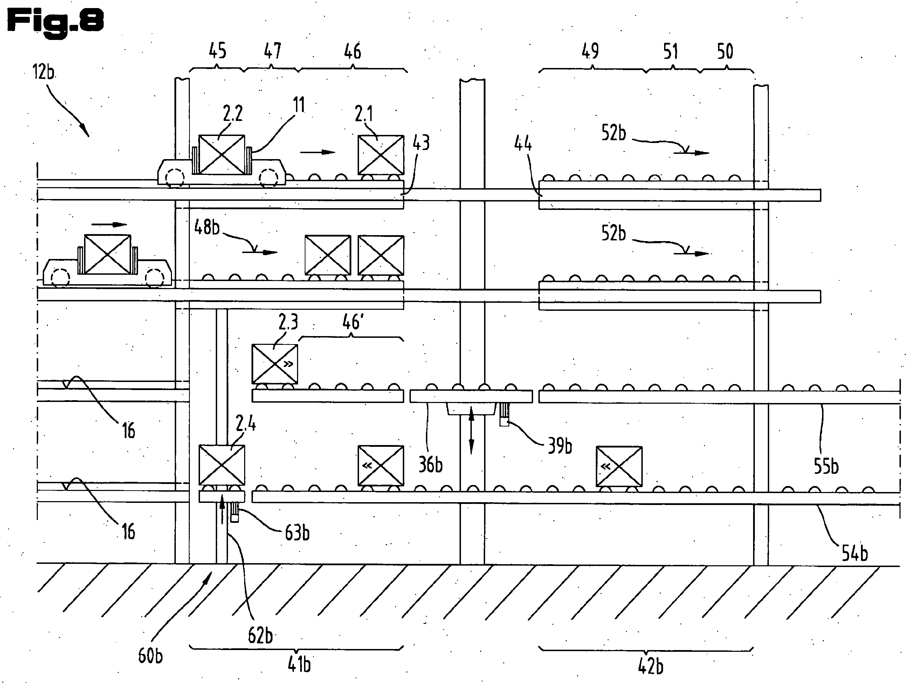

Wie in den Fig. 7 und 8 entnehmbar, sind zum Einen in den unteren beiden Regalebenen 16 des ersten Pufferstreckenabschnittes 41a und zweiten Pufferstreckenabschnittes 42b und zum Anderen in der einen unteren Regalebene 16 des ersten Pufferstreckenabschnittes 41b und zweiten Pufferstreckenabschnittes 42a keine Bereitstellfördervorrichtungen 43, 44 vorgesehen, um die Anordnung einer Fördertechnik zum Antransport von Ladegütern 3 zur Ladegut-Hebevorrichtung 34a, 34b und zum Abtransport von Ladegütern 3 von der Ladegut-Hebevorrichtung 34a, 34b zu ermöglichen.

Die Bereitstellfördervorrichtungen 43 im ersten Pufferstreckenabschnitt 41a, 41b sind jeweils durch Staubahnen gebildet, welche einen Übernahmeabschnitt 45, einen Übergabeabschnitt 46 und zwischen diesen zumindest einen Pufferabschnitt 47 umfassen. Der Übergabeabschnitt 46 umfasst nach dieser Ausführung zwei Übergabeplätze, auf denen zwei Ladegüter 2 bereitgestellt werden können. Der Übernahmeabschnitt 45 umfasst hingegen nach dieser Ausführung einen Übernahmeplatz, auf dem ein Ladegut 2 aufgenommen werden kann. Der Pufferabschnitt 51 umfasst zumindest einen Pufferplatz für ein Ladegut 2. Mittels der Staubahnen können die Ladegüter 2 von dem zur Ladegut-Hebevorrichtung 34a, 34b entfernten Übernahmeabschnitt 45 zu dem zur Ladegut-Hebevorrichtung 34a, 34b benachbarten Übergabeabschnitt 46 in einer einzigen Förderrichtung 48a, 48b gefördert werden.

Die Bereitstellfördervorrichtungen 44 im zweiten Pufferstreckenabschnitt 42a, 42b sind jeweils durch Staubahnen gebildet, welche einen Übernahmeabschnitt 49, einen Übergabeabschnitt 50 und zwischen diesen zumindest einen Pufferabschnitt 51 umfassen. Der Übernahmeabschnitt 49 umfasst nach dieser Ausführung zwei Übernahmeplätze, auf denen zwei Ladegüter 2 aufgenommen werden können. Der Übergabeabschnitt 50 umfasst hingegen nach dieser Ausführung einen Übernahmeplatz, auf dem ein Ladegut 2 bereitgestellt werden kann. Der Pufferabschnitt umfasst zumindest einen Pufferplatz für ein Ladegut 2. Mittels der Staubahnen können die Ladegüter 2 von dem zur Ladegut-Hebevorrichtung 34a, 34b benachbarten Übernahmeabschnitt 49 zu dem zur Ladegut-Hebevorrichtung 34a, 34b entfernten Übergabeabschnitt 50 in einer einzigen Förderrichtung 52a, 52b gefördert werden.

Demnach dienen die Bereitstellfördervorrichtungen 43 in den ersten Pufferstreckenabschnitten 41a, 41b einem Auslagervorgang von Ladegütern 2 und die Bereitstellfördervorrichtungen 44 in den zweiten Pufferstreckenabschnitten 42a, 42b einem Einlagervorgang von Ladegütern 2, wie noch genauer in den Fig. 8 bis 12 beschrieben wird.

Die Bereitstellfördervorrichtungen 43, 44 bzw. Staubahnen sind Staurollenförderer, Staugurtförderer und dgl., wobei ein Stauplatz jeweils einen der Übernahmeplätze für die Übernahmeabschnitte 49, ein Stauplatz den Übernahmeplatz für die Übernahmeabschnitte 45, ein Stauplatz jeweils einen der Übergabeplätze für die Übergabeabschnitte 46, ein Stauplatz den Übergabeplatz für die Übergabeabschnitte 50, ein Stauplatz zumindest einen Pufferplatz 47, 51 bildet. Somit können auf einer Bereitstellfördervorrichtung 43, 44 zumindest vier Ladegüter 2, bevorzugt fünf Ladegüter 2 gepuffert werden.

Wie die Fig. 6 und 7 erkennen lassen, weisen die Bereitstellfördervorrichtungen 43, 44 in den jeweiligen Regalebenen 16 eine einzige (nicht reversierbare) Förderrichtung 48a, 48b, 52a, 52b auf. Mit anderen Worten, sind die Bereitstellfördervorrichtungen 43, 44 jeder Puffervorrichtung 35a, 35b bzw. die Staubahnen in allen Regalebenen 16, in denen sie angeordnet sind, mit einer einzigen (nicht reversierbaren) Förderrichtung 48a, 48b, 52a, 52b betrieben. Bevorzugt werden die Bereitstellfördervorrichtungen 43, 44 jeder Puffervorrichtung 35a, 35b bzw. die Staubahnen in jeder gemeinsamen Regalebene 16, in denen sie angeordnet sind, mit einer einzigen (nicht reversierbaren) Förderrichtung 48a, 48b, 52a, 52b betrieben, daher an der Puffervorrichtung 35a, wie in Fig. 6 und 7 ersichtlich, von rechts nach links und an der Puffervorrichtung 35b, wie in Fig. 6 und 8 ersichtlich, von links nach rechts. Bloß die Förderrichtung 40a, 40b der Transportvorrichtung 36a, 36b ist reversierbar, wie oben beschrieben. Die (nicht reversierbare) Förderrichtung 48a, 52a ist aber entgegengesetzt zur (nicht reversierbaren) Förderrichtung 48b, 52b.

Wie in den Fig. 6 und 7 ersichtlich, verlaufen auch nach dieser Ausführung entlang der Ladegut-Manipulationseinheit 4' in Längsrichtung der Regalgasse 15 (X-Richtung) und in zumindest einigen der Regalebenen 16 horizontale Längstraversen 20, wie oben beschrieben. Das Förderfahrzeug 3 kann auszulagernde Ladegüter 2 von den Lagerplätzen 17 zu dem Übernahmeabschnitt 45 der ersten Pufferstreckenabschnitte 41a, 41b anzutransportieren oder einzulagernde Ladegüter 2 von dem Übergabeabschnitt 50 der zweiten Pufferstreckenabschnitte 42a, 42b zu den Lagerplätzen 17 abzutransportieren.

Die Längstraversen 20 bzw. Führungsbahnen verlaufen in Längsrichtung der Regalgasse 15 (X-Richtung) entlang der Lagerregale 12a, 12b und entlang der Ladegut-Hebevorrichtungen 34a, 34b und der Puffervorrichtungen 35a, 35b. Dabei ist entlang der Ladegut-Hebevorrichtungen 34a, 34b und der Puffervorrichtungen 35a, 35b ein Umsetzbereich 53 definiert.

Wie ausschließlich in Fig. 7 schematisch angedeutet, ist es auch möglich, dass die Transportvorrichtung 36a, 36b an ihren einander gegenüberliegenden Endbereichen jeweils mit einer relativ auf die Bereitstellfördervorrichtung 43, 44 zustellbare und motorisch angetriebenen Übertriebsrolle 64, beispielweise mit einer Verzahnung versehen ist. Die Übertriebsrolle 64 ist beispielweise auf einem Schwenkhebel gelagert und über den Antriebsmotor 39a, 39b angetrieben. Andererseits ist die Bereitstellfördervorrichtung 43, 44 an ihrem der Ladegut-Hebevorrichtung 34a, 34b zugewandten Endbereich mit einer Übertriebsrolle 64' versehen, in welche die Übertriebsrolle 64 der Transportvorrichtung 36a, 36b eingreifen kann, um so ein Antriebsmoment auf ein Förderorgan, wie Förderrolle, Förderband und dgl., welches die Bereitstellfördervorrichtung 43, 44 umfasst, zu übertragen. Ist die Bereitstellfördervorrichtung 43, 44 eine Rollenbahn, so kann die der Ladegut-Hebevorrichtung 34a, 34b benachbarte Förderrolle die Übertriebsrolle 64' bilden, welche dann ebenso beispielweise mit einer Verzahnung versehen sein kann. Die anderen Förderrollen sind mit der angetriebenen Förderrolle und untereinander beispielweise mittels nicht dargestellter Riemen gekuppelt. Auf diese Weise brauchen die unabhängig voneinander ansteuerbaren Bereitstellfördervorrichtungen 43, 44 nicht mit eigenständigen Antriebsmotoren ausgestattet werden. Dadurch kann der Steuerungsaufwand enorm verringert und können auch die Investitionskosten erheblich gesenkt werden..

Andererseits können die Bereitstellfördervorrichtungen 43, 44 unabhängig von den Transportvorrichtung 36a, 36b motorisch angetrieben werden. Ist die Bereitstellfördervorrichtung 43, 44 eine Rollenbahn, so können einige oder sämtliche Förderrollen so genannte Motorrollen sein, wie sie beispielsweise in der WO 2011/029119 A2 offenbart ist.

An die Ladegut-Manipulationseinheit 4; 4' ist eine Vorzonen-Fördertechnik zum Antransport von Ladegütern 2 zur Ladegut-Hebevorrichtung 34a und gegebenenfalls Hebevorrichtung 34b und zum Abtransport von Ladegütern 2 von der Ladegut-Hebevorrichtung 34a und gegebenenfalls Hebevorrichtung 34b angeschlossen. Diese umfasst eine die Ladegüter 2 zu der Hebevorrichtung 34a antransportierende erste Fördervorrichtung 54a und eine die Ladegüter 2 von der Hebevorrichtung 34a abtransportierende zweite Fördervorrichtung 55a.

Sind auch die Hebevorrichtung 34b und die Puffervorrichtung 35b gemäß den Fig. 6 und 7 vorgesehen, so umfasst die Fördertechnik wiederum eine die Ladegüter 2 zu der Hebevorrichtung 34b antransportierende erste Fördervorrichtung 54b und eine die Ladegüter 2 von der Hebevorrichtung 34b abtransportierende zweite Fördervorrichtung 55b.

Die erste Fördervorrichtung 54a; 54b und zweite Fördervorrichtung 55a; 55b sind nach gezeigter Ausführung in übereinander liegenden Fördertechnikebenen 56, 57 im unteren Höhenbereich (Bodenbereich) des Regallagers 1 angeordnet und weisen entgegensetzte Förderrichtungen auf, wie mit den Pfeilen angedeutet. Andererseits kann die erste Fördervorrichtung 54a; 54b und zweite Fördervorrichtung 55a; 55b in übereinander liegenden Fördertechnikebenen 56, 57 auch im oberen Höhenbereich des Regallagers 1 angeordnet sein. Die erste Fördervorrichtung 54a; 54b und zweite Fördervorrichtung 55a; 55b erstrecken sich dabei parallel zur Regalgasse 15 in der Verlängerung des jeweiligen Lagerregals 12a; 12b.

Vorzugweise liegen die Fördertechnikebene 56 und die unterste Regalebene 16 innerhalb einer ersten Horizontalebene sowie die Fördertechnikebene 57 und die darüber liegende Regalebene 16 innerhalb einer zweiten Horizontalebene. Dadurch wird eine sehr Platz sparende Anordnung der Fördertechnik erreicht.

Wie in den Fig. 1, 3, 6 und 7 ersichtlich, umfasst die erste Fördervorrichtung 54a; 54b in übereinander liegenden Fördertechnikebene 56, 57 und parallel zur Regalgasse 15 verlaufende (ortsfeste) Förderabschnitte 58, 59, welche über einen Umsetzheber 60a; 60b miteinander verbunden sind. Der obere Förderabschnitt 59 umfasst eine ortsfeste Bereitstellfördervorrichtung 44' des zweiten Pufferstreckenabschnittes 42a und gegebenenfalls die ortsfeste Bereitstellfördervorrichtung 43' des ersten Pufferstreckenabschnittes 41b. Diese Bereitstellfördervorrichtung 43'; 44' ist kürzer als die anderen Bereitstellfördervorrichtungen 43, 44 und umfasst nach einer ersten Ausführung den Übergabeabschnitt 46' oder nach einer zweiten Ausführung den Übergabeabschnitt 46' und zumindest einen Pufferplatz 47', wie schematisch in Fig. 7 eingetragen.

Sind auch die Hebevorrichtung 34b und die Puffervorrichtung 35b vorgesehen, wie die Fig. 6 bis 8 zeigen, so umfasst auch die erste Fördervorrichtung 54b einen Umsetzheber 60b für Ladegüter 2.

Der ortsfest aufgestellte Umsetzheber 60a; 60b umfasst eine heb- und senkbare Transportvorrichtung 61a, 61b für Ladegüter 2, wobei die erste Transportvorrichtung 61a auf einem über einen (nicht dargestellten) ersten Hubantrieb vertikal verstellbaren Hubrahmen und eine zweite Transportvorrichtung 61b auf einem über einen (nicht dargestellten) zweiten Hubantrieb vertikal verstellbaren Hubrahmen aufgebaut sind. Nach gezeigter Ausführung ist die erste Transportvorrichtung 61a über den Hubrahmen auf einem ersten Mast 62a und die zweite Transportvorrichtung 61b über den Hubrahmen auf einem zweiten Mast 62b gelagert.

Die Transportvorrichtungen 61a, 61b umfassen jeweils eine über einen Antriebsmotor 63a, 63b (Fig. 3, 7) antreibbare Fördervorrichtung mit einer parallel zur Regalgasse 15 verlaufenden Förderrichtung und können ein einziges Ladegut 2 oder in Förderrichtung hintereinander zwei Ladegüter 2 aufnehmen. Die Fördervorrichtung ist beispielweise eine Rollenbahn oder ein Förderband und dgl.

Die Transportvorrichtung 61a, 61b kann nun über den Hubantrieb zwischen den Förderabschnitten 58, 59 verstellt werden, um Ladegüter 2 von dem unteren Förderabschnitt 58 zu übernehmen und auf den oberen Förderabschnitt 59 abzugeben, wobei am oberen Förderabschnitt 59 ein Ladegut 2 am Übergabeabschnitt 46' bereitgestellt wird. Der Übergabeabschnitt 46' ist demnach von der Fördervorrichtung 54a, 54b ausgebildet.

Die Transportvorrichtungen 36a; 36b sind unabhängig (entkoppelt) voneinander zwischen den Regalebenen 16 auf das Höhenniveau einer jeden Regalebene 16 und auf das Höhenniveau der Fördertechnikebene 57 verstellbar, sodass Ladegüter 2 einerseits zwischen der Transportvorrichtung 36a; 36b und der Bereitstellfördervorrichtung 43, 44 und andererseits zwischen der Transportvorrichtung 36a; 36b und der Bereitstellfördervorrichtung 43, 44 und den Fördervorrichtungen 54a, 55a, 54b, 55b gefördert werden können.

Da der lichte Abstand zwischen den Fördervorrichtungen 54a, 55a; 54b; 55b etwa der Breite der Regalgasse 15 entspricht, wird eine sehr Platz sparende Anordnung der Vorzonen-Fördertechnik erreicht. Die Fördervorrichtungen 54a, 55a; 54b; 55b sind dabei über eine gemeinsame Sortierfördertechnik beispielweise an eine automatisierte Kommissionierstation (nicht dargestellt) oder eine Beladestation zum Beladen eines Ladungsträgers, wie Palette und dgl., angeschlossen.

Die einander gegenüberliegenden Bereitstellfördervorrichtungen 43, 44 sind in Richtung der Regalgasse 15 zumindest um die Länge der Transportvorrichtung 36a; 36b voneinander beabstandet, sodass die Transportvorrichtung 36a; 36b in deren auf die Regalebene 16 angehobene Übergabe- bzw. Übernahmestellung zwischen die einander zugewandten Stirnkanten der Bereitstellfördervorrichtungen 43, 44 bewegbar ist.

Ebenso sind die einander gegenüberliegenden Fördervorrichtungen 54a, 55a; 54b; 55b in Richtung der Regalgasse 15 zumindest um die Länge der Transportvorrichtung 36a; 36b voneinander beabstandet, sodass die Transportvorrichtung 36a; 36b in deren auf die Fördertechnikebene 57 abgesenkten Übergabe- bzw. Übernahmestellung zwischen die einander zugewandten Stirnkanten der Fördervorrichtungen bewegt werden kann.

Anhand der Fig. 8 bis 14 ist nun das Verfahren zum Betreiben des Regallagersystems gemäß der Ausführung in den Fig. 6 und 7 beschrieben. Der Auslagervorgang und Einlagervorgang von Ladegütern 2.1 bis 2.6 innerhalb einer der Regalebenen 16 wird anhand einer der Ladegut-Hebevorrichtungen 34b und Puffervorrichtungen 35b gemäß Fig. 8 bis 12 gezeigt. Auf gleiche Art und Weise kann der Auslagervorgang und Einlagervorgang von Ladegütern 2 innerhalb auch an der Ladegut-Hebevorrichtungen 34a und Puffervorrichtung 35a erfolgen.

Der Auslägervorgang wird durch einen Auftrag, insbesondere Kommissionierauftrag gestartet. Dieser Auftrag kann zwei oder mehrere Ladegüter 2.1, 2.2 umfassen. In der Praxis ist es von Vorteil, wenn mehrere Förderfahrzeuge 3 eingesetzt werden, sodass auf mehreren Regalebenen 16 parallel Auslagervorgänge stattfinden können. Auch zeigt die Ausführung ein Förderfahrzeug 3, welches ein einziges Ladegut 2.2 transportiert. Es ist aber genauso gut möglich, dass das Förderfahrzeug 3 gleichzeitig mehrere Ladegüter 2 transportieren kann.

Das Förderfahrzeug 3 wird für einen Auslagervorgang entlang der Fahrbahn in das Regallager 1 bis vor einen Lagerplatz 17 (Fig. 6) bewegt, wo ein gemäß einem Auftrag, insbesondere Kommissionierauftrag auszulagerndes Ladegut 2.2 mittels der Lastaufnahmevorrichtung 11 vom Lagerregal 12a, 12b auf das Förderfahrzeug 3 übernommen wird. Danach fährt das Förderfahrzeug 3 mit dem Ladegut 2.2 entlang der Fahrbahn aus dem Regallager 1 heraus in den Umsetzbereich 53 der Ladegut-Manipulationseinheit 4' bis vor einen Übernahmeplatz des ersten Übernahmeabschnittes 45.

Es ist nun möglich, dass durch einen Materialflussrechner gesteuert, das Förderfahrzeug 3 entweder zu einem dem Regallager 1 entfernten ersten Übernahmeabschnitt 45 im ersten Pufferstreckenabschnitt 41a (Fig. 7) oder zu einem dem Regallager 1 benachbarten zweiten Übernahmeabschnitt 45 im zweiten Pufferstreckenabschnitt 41b (Fig. 8) bewegt werden. Demnach kann das Förderfahrzeug 3 zumindest einen Übernahmeabschnitt 45, welchen die Ladegut-Manipulationseinheit 4' umfasst, anfahren oder zwei Übernahmeabschnitte 45, welche die Ladegut-Manipulationseinheit 4' umfasst, separat anfahren.

Ist bloß die Hebevorrichtung 34a und die Puffervorrichtung 35a gemäß der Ausführung nach Fig. 1 vorgesehen, so wird für einen Auslagervorgang das Förderfahrzeug 3 zu einem vom Regallager 1 entfernten ersten Übernahmeabschnitt 45 bewegt.

Das Förderfahrzeug 3 wird am Übernahmeabschnitt 45 angehalten, wie in den Fig. 6 und 8 an der vierten Regalebene 16 von unten eingetragen, und dort wird das auszulagernde Ladegut 2.2 mittels der Lastaufnahmevorrichtung 11 vom Förderfahrzeug 3 auf den Übernahmeabschnitt 45 der Bereitstellfördervorrichtung 43 im ersten Pufferstreckenabschnitt 41b abgegeben.

Die korrekte Übergabe des Ladegutes 2.2 auf der Bereitstellfördervorrichtung 43 im ersten Pufferstreckenabschnitt 41b kann über eine nicht dargestellte Sensorik überwacht werden. Danach wird Ladegut 2.2 vom Übernahmeabschnitt 45 in Richtung 48b auf den Übergabeabschnitt 46 gefördert.

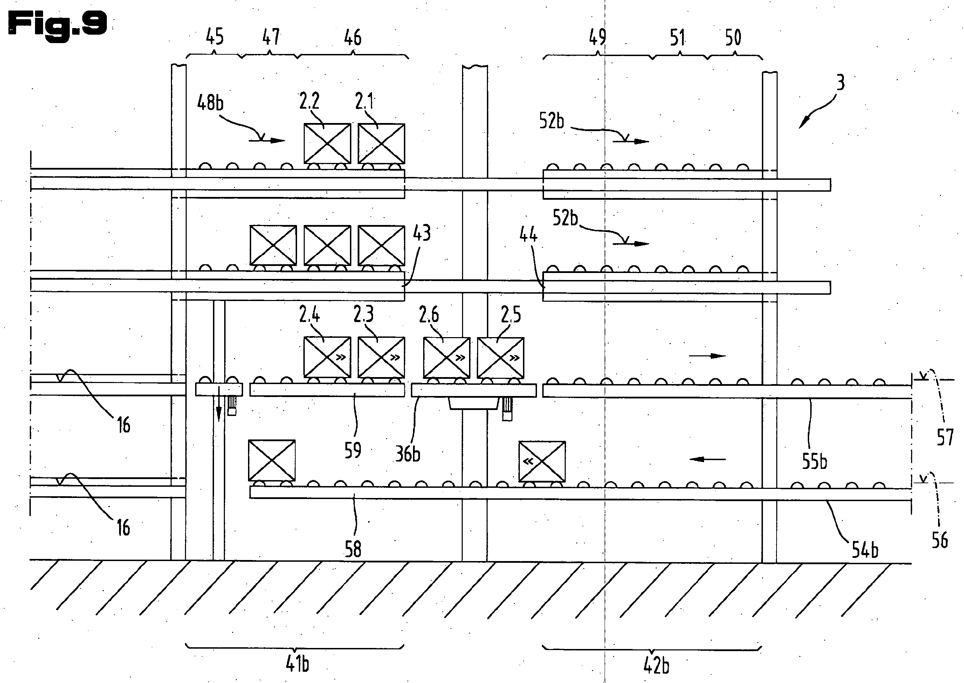

Befindet sich am Übergabeabschnitt 46 am vorderen Übergabeplatz bereits ein Ladegut 2.1, wird das Ladegut 2.2 zum Übergabeabschnitt 46 gefördert und am hinteren Übergabeplatz bereitgestellt, wie in Fig. 9 an der vierten Regalebene 16 von unten eingetragen. Wird nachfolgend zu einem Auftrag vom Förderfahrzeug 3 ein weiteres Ladegut 2 zum Übernahmeabschnitt 45 angefördert, so wird auch dieses nach deren Übergabe auf den Übernahmeabschnitt 45 in Richtung auf den Übergabeabschnitt 46 gefördert und im Pufferabschnitt 47 hinter dem Übergabeabschnitt 46 gestaut, wie in Fig. 9 an der dritten Regalebene 16 von unten eingetragen.

Das unbelegte Förderfahrzeug 3 kann nach der Übergabe des Ladegutes 2.2 auf den Übernahmeabschnitt 45 entweder erneut in das Regallager 1 fahren und für einen Auslagervorgang ein Ladegut 2 abholen oder, wie in Fig. 9 gezeigt, in derselben Regalebene 16 von einem Übergabeabschnitt 50 ein Ladegut 2 für einen Einlagervorgang übernehmen.

Nachdem nach dieser Ausführung der erste Pufferstreckenabschnitt 41b und der zweite Pufferstreckenabschnitt 42a zur Regalgasse 15 spiegelbildlich einander gegenüberliegen, kann das zwischen dem Übernahmeabschnitt 45 und dem Übergabeabschnitt 50 angehaltene Förderfahrzeug 3 in seiner Halteposition verharren, wie in Fig. 6 eingetragen, und nach der Übergabe des Ladegutes 2.2 auf den Übernahmeabschnitt 45 dort ein einzulagerndes Ladegut 2 mittels der Lastaufnahmevorrichtung 11 vom Übergabeabschnitt 50 auf das Förderfahrzeug 3 übernommen.

Ist bloß die Hebevorrichtung 34a und die Puffervorrichtung 35a vorgesehen, gemäß Fig. 1, so kann nach der Übergabe des Ladegutes 2 auf den Übernahmeabschnitt 45 im ersten Pufferstreckenabschnitt 41a das Förderfahrzeug 3 vom Übernahmeabschnitt 45 zu einem davon entfernten Übergabeabschnitt 50 im zweiten Pufferstreckenabschnitt 42a fahren. Das Förderfahrzeug 3 wird am Übergabeabschnitt 50 angehalten und in der Halteposition das einzulagernde Ladegut 2 mittels der Lastaufnahmevorrichtung 11 vom Übergabeabschnitt 50 der Bereitstellfördervorrichtung 44 auf das Förderfahrzeug 3 übernommen, wie in den Fig. 1 und 3 ersichtlich.

Ebenso wird während dem Auslagervorgang in einer der Regalebenen 16 ein Einlagervorgang gestartet. Dabei werden Ladegüter 2.3, 2.4 auf der ersten Fördertechnik 54b zum Umsetzheber 61b angefördert und von einer unteren Fördertechnikebene 56 auf eine obere Fördertechnikebene 57 angehoben und die Ladegüter 2.3, 2.4 an einem Übergabeabschnitt 46' bereitestellt, wie in den Fig. 8 und 9 eingetragen. Der Übergabeabschnitt 46' ist von der Fördervorrichtung 54b ausgebildet.

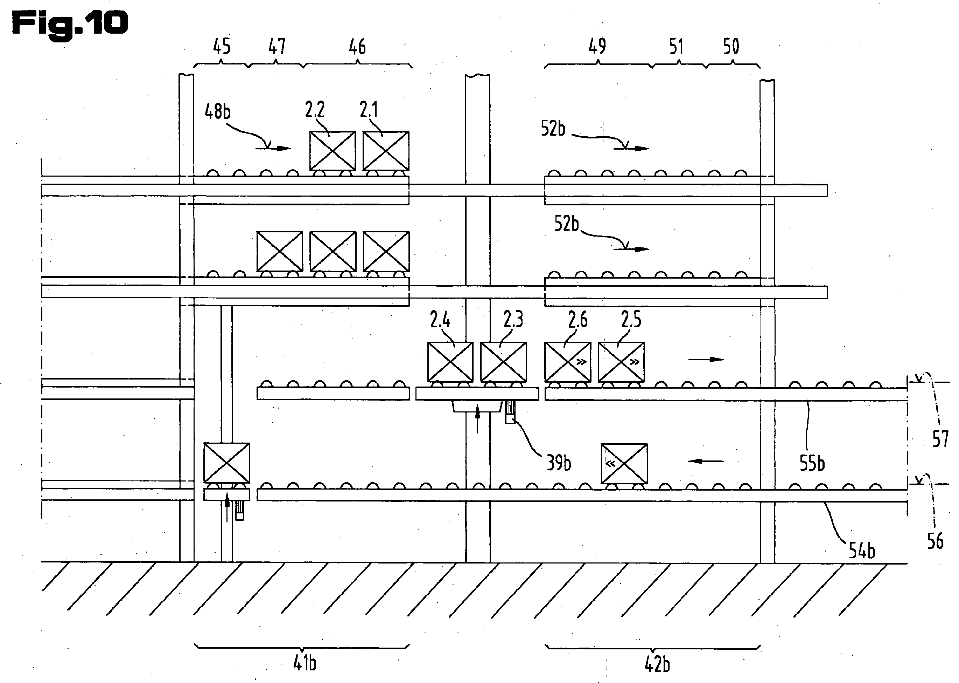

Wird nun die Transportvorrichtung 36b auf die Fördertechnikebene 57 zwischen die einander gegenüberliegenden Fördervorrichtungen 54b, 55b positioniert und die Fördervorrichtung der Transportvorrichtung 36b sowie die Fördervorrichtungen 54b, 55b angetrieben, können gleichzeitig die am Übergabeabschnitt 46' bereitgestellten, einzulagernden Ladegüter 2.3, 2.4 vom Übergabeabschnitt 46' auf die Transportvorrichtung 36b und die Ladegüter 2.5, 2.6 von der Transportvorrichtung 36b auf die Fördervorrichtung 55b gefördert werden, wie in Fig. 9 und 10 gezeigt. Durch dieses "Doppelspiel" im Bereich der Vorzonen-Fördertechnik wird eine wesentliche Leistungssteigerung des Regallagersystems erreicht.

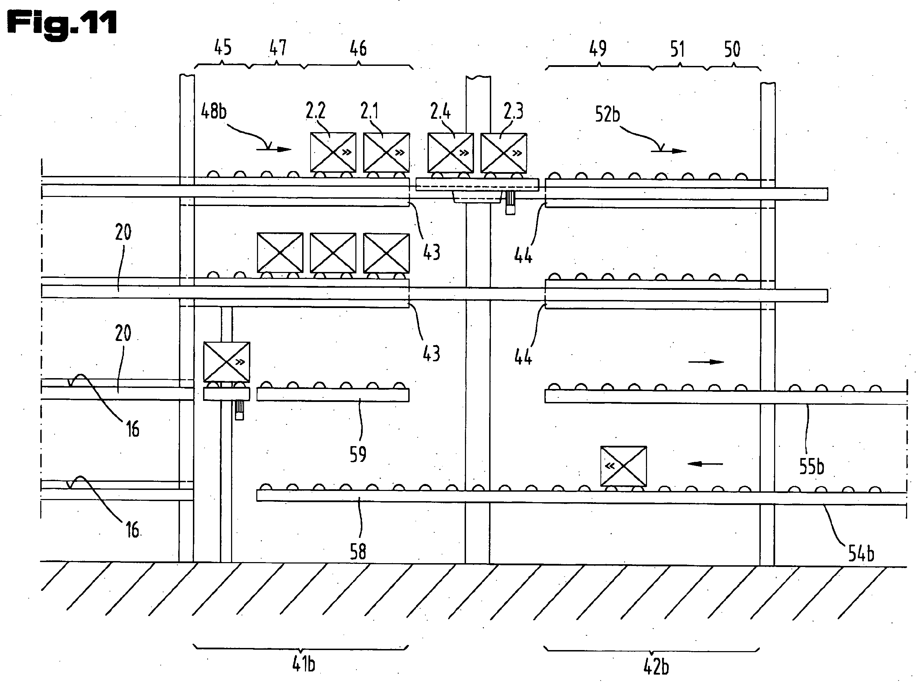

Befinden sich nun die einzulagernden Ladegüter 2.3, 2.4 auf der Transportvorrichtung 36b, wird diese in eine vom Materialflussrechner festgelegte Regalebene 16 verstellt, in welcher die zu einem Auftrag benötigten Ladegüter 2.1, 2.2 bereits am Übergabeabschnitt 46 bereitgestellt sind, wie in Fig. 11 eingetragen.

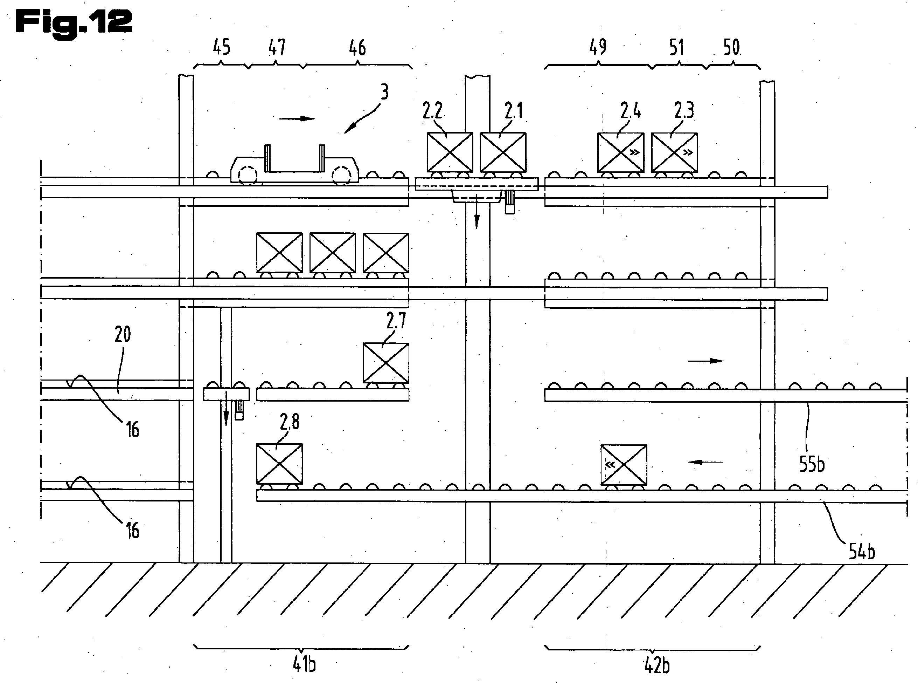

Wie in Fig. 11 gezeigt, sind am Übergabeabschnitt 46 in der vierten Regalebene 16 von unten die auszulagernden Ladegüter 2.1, 2.2 bereits bereitgestellt, sodass die Transportvorrichtung 36b vom Materialflussrechner gesteuert auf diese Regalebene 16 zwischen die Bereitstellfördervorrichtungen 43, 44 positioniert wird. Sodann werden die Fördervorrichtung der Transportvorrichtung 36b sowie die Bereitstellfördervorrichtungen 43, 44 angetrieben und dabei gleichzeitig die auszulagernden Ladegüter 2.1, 2.2 vom ersten Pufferstreckenabschnitt 41b auf die Transportvorrichtung 36b und die einzulagernden Ladegüter 2.3, 2.4 von der Transportvorrichtung 36b auf den zweiten Pufferstreckenabschnitt 42b gefördert, wie in Fig. 12 gezeigt. Durch dieses "Doppelspiel" im Bereich der Puffervorrichtung 35b wird eine wesentliche Leistungssteigerung des Regallagersystems erreicht.

Danach werden die Ladegüter 2.3, 2.4 vom Übernahmeabschnitt 49 in Richtung auf den Übergabeabschnitt 50 gefördert. Das Förderfahrzeug 3 wird zum Übergabeabschnitt 50 verfahren und von diesem das erste einzulagernde Ladegut 2.3 mittels der Lastaufnahmevorrichtung 11 auf das Förderfahrzeug 3 übernommen. Danach fährt das beladene Förderfahrzeug 3 in das Regallager 1. Wurde das Ladegut 2.3 an einem Lagerplatz 17 eingelagert, nimmt das Förderfahrzeug 3 ein Ladegut 2 auf und liefert es am Übergabeabschnitt 45 ab, wie oben beschrieben, und fährt danach neuerlich zum Übergabeabschnitt 50 und holt auch noch das zweite einzulagernde Ladegut 2.4 ab.

Natürlich ist es auch möglich, dass das Förderfahrzeug 3 gleichzeitig die zwei Ladegüter 2.3, 2.4 aufnehmen und mit einer einzigen Fahrt in das Regallager 1 einlagern kann. Auf der Rückfahrt kann es ebenso zwei Ladegüter 2 aufnehmen und beispielweise nacheinander am Übergabeabschnitt 45 im ersten Pufferstreckenabschnitt 41a; 41b oder das erste Ladegut 2 am Übergabeabschnitt 45 im ersten Pufferstreckenabschnitt 41a und das zweite Ladegut 2 am Übergabeabschnitt 45 im ersten Pufferstreckenabschnitt 41b abgeben, wie oben beschrieben.

Die Transportvorrichtung 36b wird mit den aufgenommenen Ladegütern 2.1, 2.2 zwischen die Fördervorrichtung 54a, 54b abgesenkt und danach die Ladegüter 2.1, 2.2 in einem oben beschriebenen "Doppelspiel" von der Transportvorrichtung 36b auf die zweite Fördervorrichtung 55b abgefördert und neuerlich Ladegüter 2.7, 2.8 von der ersten Fördervorrichtung 55a auf die Transportvorrichtung 36b angefördert.

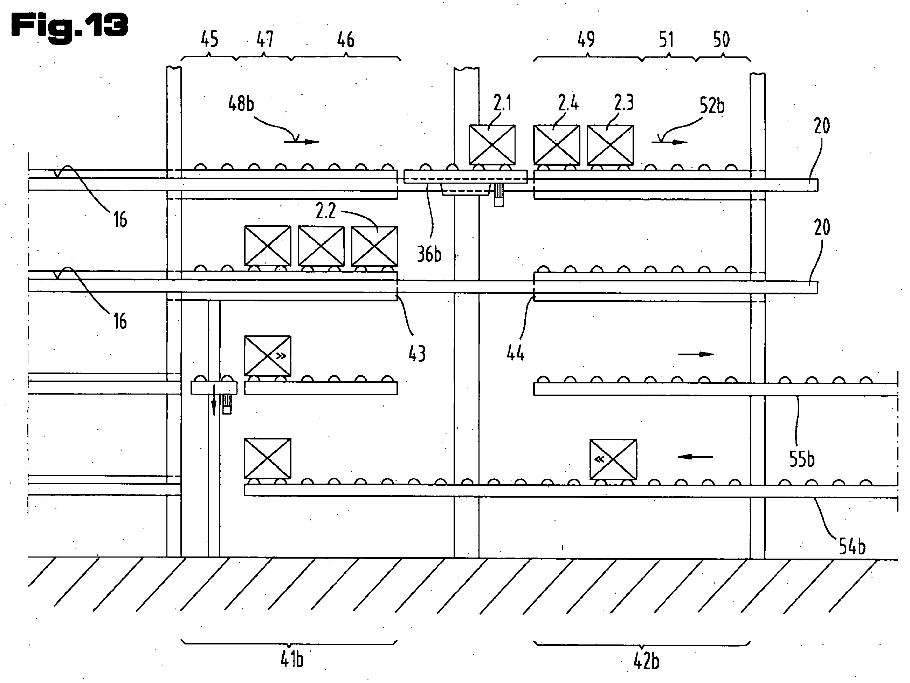

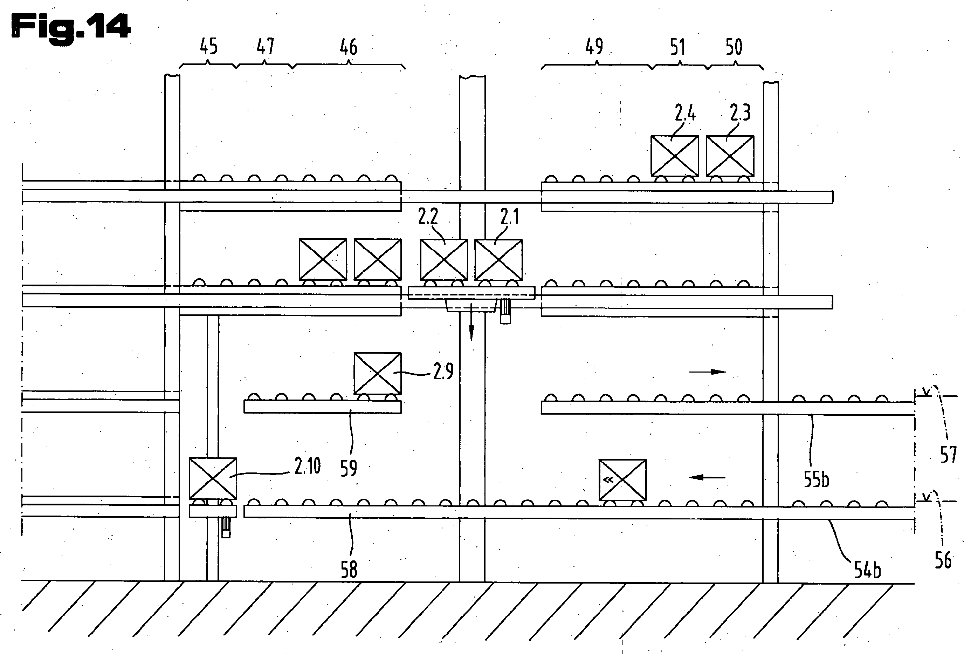

Nach einer anderen Ausführung ist es auch möglich, wie in den Fig. 13 und 14 dargestellt, dass sich die für einen Auftrag benötigten (auszulagernden) Ladegüter 2.1, 2.2 auf Bereitstellfördervorrichtungen 43 in verschiedenen Regalebenen 16 befinden. Beispielweise ist das Ladegut 2.1 in der vierten Regalebene 16 und das Ladegut 2.2 in der dritten Regalebene 16. Andererseits können die auszulagernden Ladegüter 2.1, 2.2 unterschiedlichen Aufträgen angehören und gemeinsam auf der Transportvorrichtung 36b aufgenommen werden. In diesem Fall werden die Regalebenen 16 nacheinander durch Anheben oder Absenken der Transportvorrichtung 36b angefahren.

Werden die Ladegüter 2.3, 2.4 von der Transportvorrichtung 36b auf den zweiten Pufferstreckenabschnitt 42b in der vierten Regalebene gefördert, wird gleichzeitig das Ladegut 2.1 vom ersten Pufferstreckenabschnitt 41b auf die Transportvorrichtung 36b gefördert. Danach wird die Transportvorrichtung 36b auf die dritte Regalebene 16 verstellt, in welcher sich das Ladegut 2.2 befindet. Sodann wird das Ladegut 2.2 vom ersten Pufferstreckenabschnitt 41b auf die Transportvorrichtung 36b gefördert.

Befinden sich nun die auszulagernden Ladegüter 2.1, 2.2 auf der Transportvorrichtung 36b, wird diese auf die Fördertechnikebene 57 zwischen die Fördervorrichtungen 54b, 55b verstellt, in welcher wiederum Ladegüter 2.1, 2.2, 2.9, 2.10 in oben beschriebener Weise im "Doppelspiel" manipuliert werden können.

Durch die aufeinander folgende Übernahme von Ladegütern 2.1, 2.2 kann eine "endsortierte" Reihenfolge (Sequenzierung) für die zu einem Auftrag benötigten Ladegüter 2 hergestellt werden, in welcher sie auf die Fördervorrichtung 55b abgegeben werden können. Zudem kann auch schon durch die vom Materialflussrechner koordinierte Anlieferung von Ladegütern 2 über die Förderfahrzeuge 3 zum Übernahmeabschnitt 45 im ersten Pufferstreckenabschnitt 41a, 41b auf einer oder mehreren Regalebenen 16 eine "vorsortierte" Reihenfolge (Sequenzierung) für die zu einem Auftrag benötigten Ladegüter 2 hergestellt werden. Auch ist eine Kombination der Sequenzierungen möglich.

Die Anordnung von einem ersten Pufferstreckenabschnitt 41a, 41b und zweiten Pufferstreckenabschnitt 42a, 42b jeweils beidseits zur Regalgasse ist im Hinblick auf Ausfallsicherheit (Redundanz) vorteilhaft.

Liegt an einer der Ladegut-Hebevorrichtungen 34a, 34b eine Störung vor, kann der Betrieb, daher das Auslagern und Einlagern von Ladegütern 2, über die eine funktionstüchtige Ladegut-Hebevorrichtung 34a, 34b dennoch aufrecht erhalten bleiben.

Es kann nun auch vorgesehen werden, dass während der Störungsdauer zumindest ein Förderfahrzeug 3 auf einer oder mehreren Regalebenen 16 oder die Förderfahrzeuge 3 in den jeweiligen Regalebenen 16 bereits auf den (linken) Übernahmeabschnitt 45 der Bereitstellfördervorrichtung 43 übergebene und/oder auf dem Übergabeabschnitt 46 und/oder Pufferabschnitt 47 befindliche und auszulagernde Ladegüter 2 von der einen Seite auf die andere Seite auf den (rechten) Übernahmeabschnitt 45 der Bereitstellfördervorrichtung 43 umgelagert werden. Dies kann bevorzugt auf allen Regalebenen 16 geschehen.

Das Förderfahrzeug 3 bildet demnach einen Transportweg zwischen den beidseits zur Regalgassen 15 und in deren Längsrichtung zueinander versetzten Übernahmeabschnitten 45.

Es sei an dieser Stelle auch noch darauf hingewiesen, dass der Umsetzheber 60a; 60b alternativ zur Anordnung im Bodenbereich auch im Deckenbereich des Regallagers angeordnet werden kann.

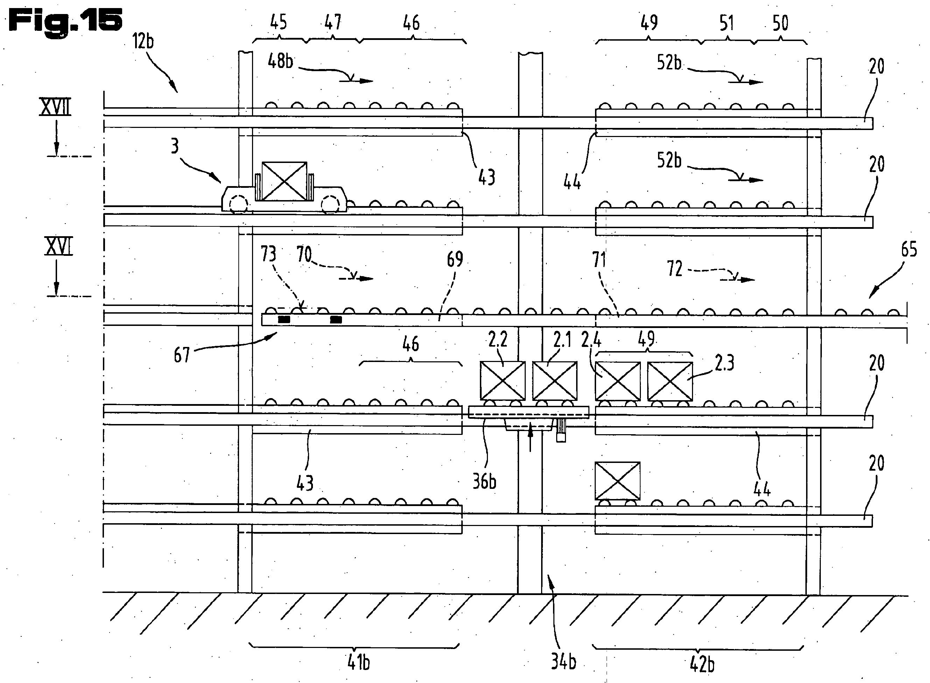

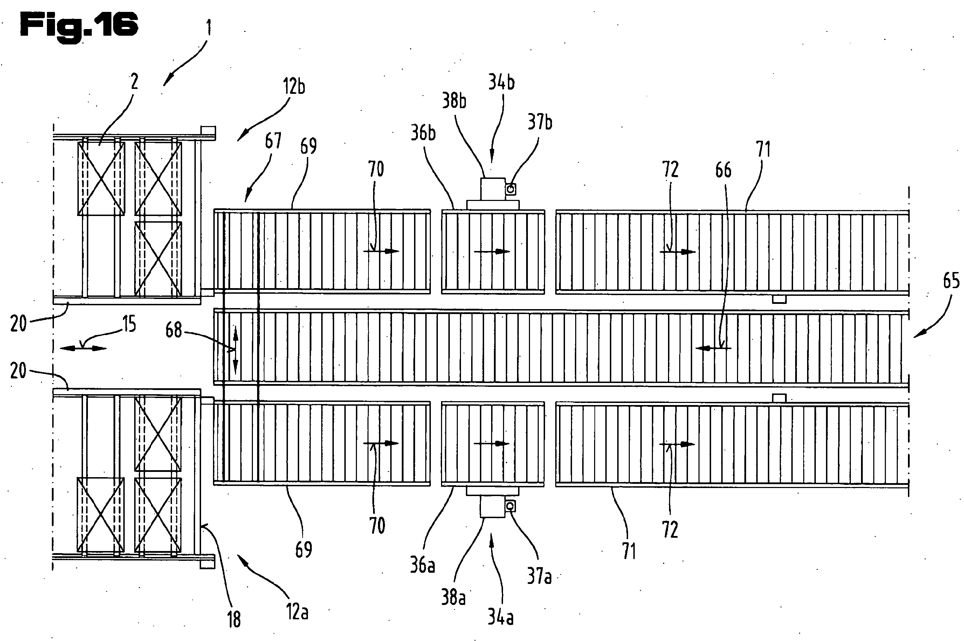

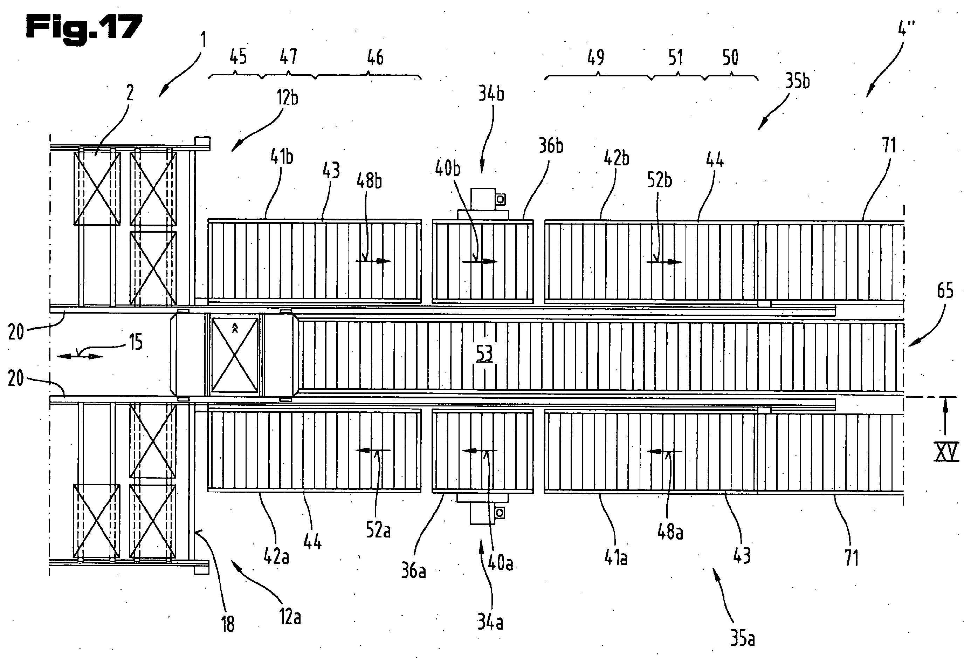

In den Fig. 15 bis 17 ist eine dritte Ausführung eines Regallagersystems gezeigt, welches ein Regallager 1 für Ladegüter 2, zumindest ein selbstfahrendes, autonomes Förderfahrzeug 3, eine Ladegut-Manipulationseinheit 4" und gegebenenfalls eine Förderfahrzeug-Hebevorrichtung 5 umfasst, wie oben beschrieben.

Die Ladegut-Manipulationseinheit 4" umfasst stirnseitig vor den Lagerregalen 12a, 12b angeordnet entweder ausschließlich eine erste Ladegut-Hebevorrichtung 34a und eine erste Puffervorrichtung 35a oder, wie gezeigt, eine erste Ladegut-Hebevorrichtung 34a, eine erste Puffervorrichtung 35a, eine zweite Ladegut-Hebevorrichtung 34b und eine zweite Puffervorrichtung 35b.

Die Ladegut-Manipulationseinheit 4" schließt an eine Vorzonen-Fördertechnik zum Antransport von Ladegütern 2 zur Ladegut-Hebevorrichtung 34a und gegebenenfalls Hebevorrichtung 34b und zum Abtransport von Ladegütern 2 von der Ladegut-Hebevorrichtung 34a und gegebenenfalls Hebevorrichtung 34b.

Diese Vorzonen-Fördertechnik ist an das Regallager 1 stirnseitig angeschlossen und umfasst nach dieser Ausführung eine zentrale Bereitstellungsbahn 65 mit einer Förderrichtung 66 in Richtung auf das Regallager 1, eine am vorderen Endbereich der Bereitstellungsbahn 65 angeordnete Ausschleusvorrichtung 67 mit einer reversierbaren Förderrichtung 68 parallel zur Regallagerseite 18, an die Ausschleusvorrichtung 67 zu beiden Seiten anschließende erste Fördervorrichtungen 69 zum Antransport von Ladegütern 2 zur Ladegut-Hebevorrichtung 34a; 34b mit einer zur Bereitstellungsbahn 65 entgegengesetzten Förderrichtung 70 und an die Ladegut-Hebevorrichtung 34a; 34b anschließende zweite Fördervorrichtungen 71 zum Abtransport von Ladegütern 2 von der Ladegut-Hebevorrichtung 34a; 34b mit einer zur Bereitstellungsbahn 65 entgegengesetzten Förderrichtung 72.

Die erste Fördervorrichtung 70 und zweite Fördervorrichtung 71 sind vorzugsweise innerhalb einer Fördertechnikebene 73 angeordnet. Andererseits können diese auch auf unterschiedlichen, übereinander liegenden Fördertechnikebenen verlaufen, sodass die Transportvorrichtung 36a, 36b auf unterschiedlichen Fördertechnikebenen Ladegüter 2 einlagert und auslagert. Die Fördervorrichtungen 70, 71 erstrecken sich dabei zu beiden Seiten und parallel zur Regalgasse 15 in der Verlängerung des jeweiligen Lagerregals 12a; 12b. Die Bereitstellungsbahn 65 verläuft in der und parallel zur Regalgasse 15.

Die Bereitstellungsbahn 65, Fördervorrichtungen 70, 71 sind jeweils durch eine Staubahn gebildet und umfasst eine Rollenbahn oder ein Förderband und dgl.

Die Ausschleusvorrichtung 67 ist beispielsweise durch einen heb- und senkbaren Riemenumsetzer gebildet, welcher die Bereitstellungsbahn 65 und die Fördervorrichtungen 69 miteinander verbindet. Andererseits kann die Ausschleusvorrichtung 67 auch durch einen mittels eines Stellantriebes nach beiden Richtungen relativ zur Bereitstellungsbahn 65 betätigbaren Schieber gebildet sein.

Auch nach dieser Ausführung ist bei einem Einlagervorgang bzw. Auslagervorgang das oben beschriebene "Doppelspiel" im Bereich der Vorzonen-Fördertechnik einerseits während der Verlagerung von Ladegütern 2 zwischen der Transportvorrichtung 36a; 36b und der ersten Fördervorrichtung 69 (Einlagerfördervorrichtung) und andererseits während der Verlagerung von Ladegütern 2 zwischen der Transportvorrichtung 36a; 36b und der zweite Fördervorrichtung 71 (Auslagerfördervorrichtung) realisiert, was zu einer wesentlichen Leistungssteigerung des Regallagersystems führt, wie oben beschrieben.

Die Fig. 15 zeigt, wie auszulagernde Ladegüter 2.1, 2.2 vom Übergabeabschnitt 46 der Bereitstellfördervorrichtung 43 auf die Transportvorrichtung 36b übernommen und einzulagernde Ladegüter 2.3, 2.4 von der Transportvorrichtung 36b auf den Übernahmeabschnitt 49 der Bereitstellfördervorrichtung 44 übergeben wurden. Danach werden die auszulagernden Ladegüter 2.1, 2.2 über die Transportvorrichtung 36b auf die Fördertechnikebene 73 angehoben und die Transportvorrichtung 36b zwischen den Fördervorrichtungen 69, 71 positioniert. Sodann werden die Fördervorrichtung der Transportvorrichtung 36b sowie die Fördervorrichtungen 69, 71 angetrieben. Dabei können wiederum gleichzeitig einzulagernde Ladegüter (nicht eingetragen) von der ersten Fördervorrichtung 69 auf die Transportvorrichtung 36b und die Ladegüter 2.1, 2.2 von der Transportvorrichtung 36b auf die zweite Fördervorrichtung 71 gefördert werden. Durch diese Maßnahmen werden sowohl ein "Doppelspiel" im Bereich der Vorzonen-Fördertechnik als auch ein "Doppelspiel" im Bereich der Puffervorrichtung 35b erreicht, wie oben ausführlich beschrieben.

Ebenso ist auch nach dieser Ausführung die oben beschrieben Sequenzierung möglich. Auch kann die Ladegut-Manipulationsvorrichtung 4" wiederum bloß die Hebevorrichtung 34a und die Puffervorrichtung 35a aufweisen, wie in den Fig. 1 und 3 gezeigt, aber die beschriebene Vorzonen-Fördertechnik umfassen

Die Ladegut-Manipulationseinheit 4; 4'; 4" ist nach den gezeigten Ausführungen stirnseitig vor dem Regallager 1 angeordnet. Ebenso kann die Ladegut-Manipulationseinheit 4; 4'; 4" zwischen den stirnseitigen Regallagerseiten 18, 19 angeordnet, daher im Regallager bzw. in den Lagerregalen 12a, 12b integriert werden.

Die in den Fig. 6, 7 bzw. 15 bis 17 gezeigten Ausführungen erweisen sich auch von Vorteil, wenn einerseits die der ersten Ladegut-Hebevorrichtung 34a zugeordnete erste Fördertechnik 54a; 69 und zweite Fördertechnik 55a; 71 an einen ersten Arbeitsplatz und andererseits die der zweiten Ladegut-Hebevorrichtung 34b zugeordnete erste Fördertechnik 54b; 69 und zweite Fördertechnik 55b; 71 an einen zweiten Arbeitsplatz angeschlossen sind. Demnach sind pro Regalgasse 15 zwei Arbeitsplätze angeschlossen. Der Arbeitsplatz ist beispielweise eine Kommissionierstation (nicht dargestellt) oder eine Beladestation zum Beladen eines Ladungsträgers, wie Palette und dgl.

Auch wenn nach den oben gezeigten Ausführungen (Fig. 1-3 und Fig. 6-8) die Bereitstellfördervorrichtungen 43, 44 erst ab der dritten Regalebene 16 vorgesehen sind, ist es genauso gut möglich, dass auch in den beiden unteren Regalebenen 16 die Bereitstellfördervorrichtungen 43 und/oder die Bereitstellfördervorrichtungen 44 vorgesehen werden, wie dies jedoch nicht dargestellt ist. In diesem Fall sind dann die ersten Bereitstellfördervorrichtungen 43 und/oder die zweiten Bereitstellfördervorrichtungen 44 über alle Regalebenen 16 angeordnet, welche je Puffervorrichtung 35a; 35b über alle Regalebenen 16 in eine einzige Förderrichtung 48a, 52a; 48a, 52a, 48b, 52b, wie oben beschrieben, angetrieben werden.

Die ersten Bereitstellfördervorrichtungen 43 sind dabei beispielsweise durch Förderabschnitte der Fördervorrichtungen 54a; 54b; 55a; 55b gebildet. Hierzu ist es vorgesehen, dass sich auch in der ersten und zweiten Regalebene 16 die Längstraversen 20 entsprechend der obigen Ausführungen entlang der Ladegut-Hebevorrichtung 34a; 34b als auch der Puffervorrichtung 35a; 35b erstrecken. Die ersten Bereitstellfördervorrichtungen 43 im ersten Pufferstreckenabschnitt 41a; 41b dienen einem Auslagervorgang, wie oben beschrieben.

Dabei können auszulagernde Ladegüter 2 der ersten Regalebene 16 vom Förderfahrzeug 3 auf den Förderabschnitt, welcher den oben beschriebenen Übernahmeabschnitt 45 bildet, der Fördervorrichtung 54a; 54b übergeben und von dieser zum Umsetzheber 60a; 60b und danach über die Bereitstellfördervorrichtung 44' sowie der Ladegut-Hebevorrichtung 34a; 34b auf die Fördervorrichtung 55a; 5b abgefördert werden. Andererseits können auszulagernde Ladegüter 2 der zweiten Regalebene 16 vom Förderfahrzeug 3 direkt auf den Förderabschnitt, welcher den oben beschriebenen Übernahmeabschnitt 45 bildet, der Fördervorrichtung 55a; 55b übergeben und von dieser abgefördert werden.

Nach einer anderen Ausführung können die ersten Bereitstellfördervorrichtungen 43, welche in der ersten und zweiten Regalebene 16 unterhalb der ersten Bereitstellfördervorrichtungen 43 der oberhalb liegenden Regalebenen 16 angeordnet sind, und die Fördervorrichtungen 54a, 55a; 54b, 55b vorgesehen werden, wobei dann die Fördervorrichtungen 54a, 55a; 54b, 55b in vertikaler Richtung oberhalb und/oder unterhalb der ersten Bereitstellfördervorrichtungen 43 verlaufen.

Die zweiten Bereitstellfördervorrichtungen 44 sind an den Umsetzheber 60a; 60b angeschlossen und auf der dem/den Lagerregal(en) 12a; 12b zugewandten Seite angeordnet. Die zweiten Bereitstellfördervorrichtungen 44 dienen einem Einlagervorgang, wie oben beschrieben.

Die Bereitstellfördervorrichtungen 44 im zweiten Pufferstreckenabschnitt 42a; 42b sind jeweils durch Staubahnen gebildet, welche den Übernahmeplatz 49, den Übergabeabschnitt 50 und zwischen diesen zumindest einen Pufferabschnitt 51 umfassen, wie oben beschrieben. Mittels der Staubahnen können die Ladegüter 2 von dem zur Ladegut-Hebevorrichtung 34a; 34b benachbarten Übernahmeabschnitt 49 zu dem zur Ladegut-Hebevorrichtung 34a entfernten Übergabeabschnitt 50 in einer einzigen Förderrichtung 52a; 52b gefördert werden. Die Übergabe der Ladegüter 2 auf die Bereitstellfördervorrichtungen 44 kann direkt durch den Umsetzheber 60a; 60b erfolgen, welcher die oben beschriebene Transportvorrichtung 61a; 61b umfasst und über den Hubantrieb zwischen den Regalebenen 16 verstellbar ist. Dabei werden die Ladegüter 2 von der Fördervorrichtung 54a; 54b über den Umsetzheber 60a; 60b entweder auf die Bereitstellfördervorrichtung 44 in der ersten Regalebene 16 oder auf die Bereitstellfördervorrichtung 44 in der zweiten Regalebene 16 gefördert. Der Transport der Ladegüter 2 auf die Bereitstellfördervorrichtung 44 in der dritten oder einer oberhalb liegenden Regalebene 16, wurde oben bereits beschrieben. Hierzu ist es vorgesehen, dass der Antriebsmotor 63a, 63b die Förderrichtung der Transportvorrichtung 61a; 61b reversieren kann.

Die Ladegut-Manipulationseinheit 4; 4' umfasst nach dieser (nicht gezeigten) Ausführung die Ladegut-Hebevorrichtung 34a; 34b und den Umsetzheber 60a; 60b.

Die Ausführungsbeispiele zeigen mögliche Ausführungsvarianten des Regallagers, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt. Es sind also auch sämtliche denkbaren Ausführungsvarianten, die durch Kombinationen einzelner Details der dargestellten und beschriebenen Ausführungsvariante möglich sind, vom Schutzumfang mit umfasst.

Der Ordnung halber sei abschließend darauf hingewiesen, dass zum besseren Verständnis des Aufbaus des Regallagersystems dieses bzw. dessen Bestandteile teilweise unmaßstäblich und/oder vergrößert und/oder verkleinert dargestellt wurden.

Vor allem können die einzelnen in den Fig. 1 bis 17 gezeigten Ausführungen den Gegenstand von eigenständigen, erfindungsgemäßen Lösungen bilden.

**Bezugszeichenaufstellung**

| | | | |
|---|---|---|---|
| 1 | Regallager | 31 | Hubantrieb |
| 2 | Ladegut | 32 | Aufnahmevorrichtung |
| 3 | Förderfahrzeug | 33 | Längstraverse |
| 4 | Ladegut-Manipulationseinheit | 34 | Ladegut-Hebevorrichtung |
| 5 | Förderfahrzeug-Hebevorrichtung | 35 | Puffervorrichtung |
| | | | |
| 6 | Grundrahmen | 36 | Transportvorrichtung |
| 7 | Laufrad | 37 | Hubantrieb |
| 8 | Fahrmotor | 38 | Mast |
| 9 | Führungsvorrichtung | 39 | Antriebsmotor |
| 10 | Führungsrad | 40 | Förderrichtung |
| | | | |
| 11 | Lastaufnahmevorrichtung | 41 | Pufferstreckenabschnitt |
| 12 | Lagerregal | 42 | Pufferstreckenabschnitt |
| 13 | Teleskoparm | 43 | Bereitstellfördervorrichtung |
| 14 | Mitnehmer | 44 | Bereitstellfördervorrichtung |
| 15 | Regalgasse | 45 | Übernahmeabschnitt |
| | | | |
| 16 | Regalebene | 46 | Übergabeabschnitt |
| 17 | Lagerplatz | 47 | Pufferabschnitt |
| 18 | Regallagerseite | 48 | Förderrichtung |
| 19 | Regallagerseite | 49 | Übernahmeabschnitt |
| 20 | vordere Längstraverse | 50 | Übergabeabschnitt |
| | | | |
| 21 | hintere Längstraverse | 51 | Pufferabschnitt |
| 22 | Querträger | 52 | Förderrichtung |
| 23 | Profilsteg | 53 | Umsetzbereich |
| 24 | oberer Profilflansch | 54 | Fördervorrichtung |
| 25 | unterer Profilflansch | 55 | Fördervorrichtung |
| | | | |
| 26 | Führungssteg | 56 | Fördertechnikebene |
| 27 | Energieversorgungssystem | 57 | Fördertechnikebene |
| 28 | Schleifleitung | 58 | Förderabschnitt |
| 29 | Stromabnehmer | 59 | Förderabschnitt |
| 30 | Führungsrahmen | 60 | Umsetzheber |
| 61 | Transportvorrichtung | | |
| 62 | Mast | | |
| 63 | Antriebsmotor | | |
| 64 | Übertriebsrolle | | |
| 65 | Bereitstellungsbahn | | |
| | | | |
| 66 | Förderrichtung | | |
| 67 | Ausschleusvorrichtung | | |
| 68 | Förderrichtung | | |
| 69 | Fördervorrichtung | | |
| 70 | Förderrichtung | | |
| | | | |
| 71 | Fördervorrichtung | | |
| 72 | Förderrichtung | | |
| 73 | Fördertechnikebene | | |

## Patentansprüche

1. Regallagersystem mit
Lagerregalen (12a, 12b), welche in übereinander liegenden Regalebenen (16) Lagerplätze (17) für Ladegüter (2) aufweisen, und
einer Ladegut-Manipulationseinheit (4; 4'; 4"), welche zumindest eine erste Ladegut-Hebevorrichtung (34a) mit einer heb- und senkbaren Transportvorrichtung (36a) zum Einlagern und Auslagern von Ladegütern (2) und eine erste Puffervorrichtung (35a) zum Zwischenspeichern von Ladegütern (2) auf deren Bereitstellfördervorrichtungen (43, 44) aufweist, und
zumindest einer zwischen den Lagerregalen (12a, 12b) und entlang der Ladegut-Hebevorrichtung (34a) sowie Puffervorrichtung (35a) verlaufenden Regalgasse (15), und
in Längsrichtung der Regalgasse (15) in zumindest einigen der Regalebenen (16) verlaufenden Führungsbahnen (20), und
zumindest einem entlang der Führungsbahnen (20) verfahrbaren Einebenenregalbediengerät (3) zum Transport von Ladegütern (2) zwischen den Lagerplätzen (17) und der Puffervorrichtung (35a) sowie
einer an die Ladegut-Hebevorrichtung (34a) angeschlossenen Fördertechnik mit einer ersten Fördertechnik (54a; 69) zum Antransport von Ladegütern (2) zu der Ladegut-Hebevorrichtung (34a) und einer zweiten Fördertechnik (55a; 71) zum Abtransport von Ladegütern (2) von der Ladegut-Hebevorrichtung (34a), wobei
die Puffervorrichtung (35a) zumindest in einigen der Regalebenen (16) ortsfest einen ersten Pufferstreckenabschnitt (41a) und zweiten Pufferstreckenabschnitt (42a) umfasst, in welchen die Bereitstellfördervorrichtungen (43, 44) angeordnet sind und zwischen welche die Transportvorrichtung (36a) der Ladegut-Hebevorrichtung (34a) zumindest in einigen der Regalebenen (16) positionierbar und derart antreibbar ist, dass gleichzeitig zumindest ein erstes Ladegut (2) vom ersten Pufferstreckenabschnitt (41a) auf die Transportvorrichtung (36a) und zumindest ein zweites Ladegut (2) von der Transportvorrichtung (36a) auf den zweiten Pufferstreckenabschnitt (42a) förderbar ist,
wobei der erste Pufferstreckenabschnitt (41a) mit den Bereitstellfördervorrichtungen (43) und der zweite Pufferstreckenabschnitt (42a) mit den Bereitstellfördervorrichtungen (44) relativ zur Regalgasse (15) vor und hinter der Ladegut-Hebevorrichtung (34a) sowie seitlich neben der Regalgasse (15) entlang der Führungsbahnen (20) vorgesehen sind, und
wobei der erste Pufferstreckenabschnitt (41a) ausschließlich einem Auslagervorgang für Ladegüter (2) und der zweite Pufferstreckenabschnitt (42a) ausschließlich einem Einlagervorgang für Ladegüter (2) dienen,
**dadurch gekennzeichnet, dass**
die Führungsbahnen (20) in Längsrichtung der Regalgasse (15) entlang der Lagerregale (12a, 12b), der Ladegut-Hebevorrichtung (34a) und der Puffervorrichtung (35a) verlaufen und dass auch die zwischen den Fördervorrichtungen (54a, 55a; 69, 71) und den Pufferstreckenabschnitten (41a, 42a) angeordnete Ladegut-Hebevorrichtung (34a) mit der heb- und senkbaren Transportvorrichtung (36a) zum Einlagern und Auslagern von Ladegütern (2) seitlich neben der Regalgasse (15) entlang der Führungsbahnen (20) vorgesehen ist,
die Bereitstellfördervorrichtungen (43) im ersten Pufferstreckenabschnitt (41a) durch, die Ladegüter (2) von dem zur Ladegut-Hebevorrichtung (34a) entfernten Übernahmeabschnitt (45) zu einem zur Ladegut-Hebevorrichtung (34a) benachbarten Übergabeabschnitt (46) in einer einzige, nicht reversierbaren Förderrichtung (48a) bewegende Staubahnen gebildet sind, wobei der Übernahmeabschnitt (45) vom Einebenenregalbediengerät (3) anfahrbar und ein Ladegut (2) vom Einebenenregalbediengerät (3) auf den Übernahmeabschnitt (45) umsetzbar ist, und wobei
die Bereitstellfördervorrichtungen (44) im zweiten Pufferstreckenabschnitt (42a) durch, die Ladegüter (2) von einem zur Ladegut-Hebevorrichtung (34a) benachbarten Übernahmeabschnitt (49) zu dem zur Ladegut-Hebevorrichtung (34a) entfernten Übergabeabschnitt (50) in einer einzigen, nicht reversierbaren Förderrichtung (52a) bewegende Staubahnen gebildet sind, wobei der Übergabeabschnitt (50) vom Einebenenregalbediengerät (3) anfahrbar und ein Ladegut (2) vom Übergabeabschnitt (50) auf das Einebenenregalbediengerät (3) umsetzbar ist.

2. Regallagersystem nach Anspruch 1, **dadurch gekennzeichnet, dass** die Ladegut-Manipulationseinheit (4'; 4") ferner eine zweite Ladegut-Hebevorrichtung (34b) mit einer heb- und senkbaren Transportvorrichtung (36b) zum Einlagern und Auslagern von Ladegütern (2) und eine zweite Puffervorrichtung (35b) zum Zwischenspeichern von Ladegütern (2) auf deren Bereitstellfördervorrichtungen (43, 44) aufweist, welche entlang der Regalgasse (15) angeordnet ist und wobei an die zweite Ladegut-Hebevorrichtung (34b) eine Fördertechnik mit einer ersten Fördertechnik (54b; 69) zum Antransport von Ladegütern (2) zu der Ladegut-Hebevorrichtung (34b) und einer zweiten Fördertechnik (55b; 71) zum Abtransport von Ladegütern (2) von der Ladegut-Hebevorrichtung (34b) angeschlossen ist und wobei die Puffervorrichtung (35b) zumindest in einigen der Regalebenen (16) ortsfest einen ersten Pufferstreckenabschnitt (41b) und zweiten Pufferstreckenabschnitt (42b) umfasst, in welchen die Bereitstellfördervorrichtungen (43, 44) angeordnet sind und zwischen welche die Transportvorrichtung (36b) der Ladegut-Hebevorrichtung (34b) zumindest in einigen der Regalebenen (16) positionierbar und derart antreibbar ist, dass gleichzeitig zumindest ein erstes Ladegut (2) vom ersten Pufferstreckenabschnitt (42b) auf die Transportvorrichtung (36b) und zumindest ein zweites Ladegut (2) von der Transportvorrichtung (36b) auf den zweiten Pufferstreckenabschnitt (42b) förderbar ist,
wobei der erste Pufferstreckenabschnitt (41b) mit den Bereitstellfördervorrichtungen (43) und der zweite Pufferstreckenabschnitt (42b) mit den Bereitstellfördervorrichtungen (44) relativ zur Regalgasse (15) vor und hinter der Ladegut-Hebevorrichtung (34b) sowie seitlich neben der Regalgasse (15) entlang der Führungsbahnen (20) vorgesehen sind und
der erste Pufferstreckenabschnitt (41b) ausschließlich einem Auslagervorgang für Ladegüter (2) und der zweite Pufferstreckenabschnitt (42b) ausschließlich einem Einlagervorgang für Ladegüter (2) dienen,
wobei die Bereitstellfördervorrichtungen, (43) im ersten Pufferstreckenabschnitt (41b) durch, die Ladegüter (2) von einem zur Ladegut-Hebevorrichtung (34b) entfernten Übernahmeabschnitt (45) zu einem zur Ladegut-Hebevorrichtung (34b) benachbarten Übergabeabschnitt (46) in einer einzigen, nicht reversierbaren Förderrichtung (48b) bewegende Staubahnen gebildet sind, wobei der Übernahmeabschnitt (45) vom Einebenenregalbediengerät (3) anfahrbar und ein Ladegut (2) vom Einebenenregalbediengerät (3) auf den Übernahmeabschnitt (45) umsetzbar ist, und
wobei die Bereitstellfördervorrichtungen (44) im zweiten Pufferstreckenabschnitt (42b) durch, die Ladegüter (2) von einem zur Ladegut-Hebevorrichtung (34b) benachbarten Übernahmeabschnitt (49) zu einem zur Ladegut-Hebevorrichtung (34b) entfernten Übergabeabschnitt (50) in einer einzigen, nicht reversierbaren. Förderrichtung (52b) bewegende Staubahnen gebildet sind, wobei der Übergabeabschnitt (50) vom Einebenenregalbediengerät (3) anfahrbar und ein Ladegut (2) vom Übergabeabschnitt (50) auf das Einebenenregalbediengerät (3) umsetzbar ist.

3. Regallagersystem nach Anspruch 1 oder 2, **dadurch gekennzeichnet, dass** die Staubahnen jeweils zwischen dem Übernahmeplatz (45; 49) und dem Übergabeplatz (46; 50) zumindest einen Pufferabschnitt (47; 51) ausbilden.

4. Regallagersystem nach Anspruch 2, **dadurch gekennzeichnet, dass** die Ladegut-Hebevorrichtungen (34a, 34b) zumindest um eine Gassenbreite voneinander distanziert aufgestellt sind und spiegelbildlich einander gegenüberliegen.

5. Regallagersystem nach Anspruch 2, **dadurch gekennzeichnet, dass** die Ladegut-Hebevorrichtungen (34a, 34b) zumindest um eine Gassenbreite voneinander distanziert aufgestellt sind und in Richtung der Regalgasse (15) axial versetzt angeordnet sind.

6. Regallagersystem nach Anspruch 1 oder 2, **dadurch gekennzeichnet, dass** die Transportvorrichtung (36a; 36b) der Ladegut-Hebevorrichtung (34a; 34b) zwischen den einander gegenüberliegenden Fördervorrichtungen (54a; 54b; 55a; 55b; 69, 71) positionierbar und derart antreibbar ist, dass gleichzeitig zumindest ein erstes Ladegut (2) von der ersten Fördervorrichtung (54a; 54b; 69) auf die Transportvorrichtung (36a; 36b) und zumindest ein zweites Ladegut (2) von der Transportvorrichtung (36a; 36b) auf die zweite Fördervorrichtung (55a; 55b; 71) förderbar ist.

7. Regallagersystem nach Anspruch 6, **dadurch gekennzeichnet, dass** die erste Fördervorrichtung (54a; 54b) zum Antransport von Ladegütern (2) zur Ladegut-Hebevorrichtung (34a; 34b) in übereinander liegenden Fördertechnikebenen (56, 57) und parallel zur Regalgasse (15) verlaufende Förderabschnitte (58, 59) umfasst, welche über einen Umsetzheber (60) miteinander verbunden sind.

8. Regallagersystem nach Anspruch 1 oder 2, **dadurch gekennzeichnet, dass** die Fördertechnik eine an die jeweilige Ladegut-Hebevorrichtung (34a; 34b) angeschlossene erste Fördervorrichtung (69) zum Antransport von Ladegütern (2) zur Ladegut-Hebevorrichtung (34a; 34b) und eine zweite Fördervorrichtung (71) zum Abtransport von Ladegütern (2) von der Ladegut-Hebevorrichtung (34a; 34b) und eine in der Regalgasse (15) verlaufende Bereitstellungsbahn (65) sowie eine Ausschleusvorrichtung (67) zum Transport von Ladegütern (2) von der Bereitstellungsbahn (65) auf die erste Fördervorrichtung (69) umfasst.

9. Regallagersystem nach Anspruch 1 oder 2, **dadurch gekennzeichnet, dass** die Ladegut-Manipulationseinheit (4; 4'; 4") stirnseitig an die Lagerregale (12a, 12b) anschließt.

10. Regallagersystem nach Anspruch 1 oder 2, **dadurch gekennzeichnet, dass** die Ladegut-Manipulationseinheit (4; 4'; 4") in den Lagerregalen (12a, 12b) integriert ist.

11. Regallagersystem nach einem der Ansprüche 2 bis 10, **dadurch gekennzeichnet, dass** die erste Fördervorrichtung (54a; 69) zum Antransport von Ladegütern (2) zur ersten Ladegut-Hebevorrichtung (34a) und die zweite Fördervorrichtung (55a; 71) zum Abtransport von Ladegütern (2) von der ersten Ladegut-Hebevorrichtung (34a) an einen ersten Arbeitsplatz und die erste Fördervorrichtung (54b; 69) zum Antransport von Ladegütern (2) zur zweiten Ladegut-Hebevorrichtung (34b) und die zweite Fördervorrichtung (55b; 71) zum Abtransport von Ladegütern (2) von der zweiten Ladegut-Hebevorrichtung (34b) an einen zweiten Arbeitsplatz angeschlossen sind.

12. Verfahren zum Betreiben eines gemäß den Ansprüchen 1 bis 11 ausgebildeten Regallagersystems, bei dem die Transportvorrichtung (36a; 36b) der Ladegut-Hebevorrichtung (34a; 34b) zumindest in einigen der Regalebenen (16) zwischen einem ersten Pufferstreckenabschnitt (41a; 41b) und einem zweiten Pufferstreckenabschnitt (42a; 42b) positioniert und derart angetrieben wird, dass gleichzeitig ein erstes Ladegut (2) vom ersten Pufferstreckenabschnitt (41a; 41b) auf die Transportvorrichtung (36a; 36b) und ein zweites Ladegut (2) von der Transportvorrichtung (36a; 36b) auf den zweiten Pufferstreckenabschnitt (42a; 42b) gefördert wird,
**dadurch gekennzeichnet, dass**
das erste Ladegut (2) durch das Einebenenregalbediengerät (3) von einem Lagerplatz (17) zu einem zur Ladegut-Hebevorrichtung (34a; 34b) entfernten Übernahmeabschnitt (45) auf der Bereitstellfördervorrichtung (43) im ersten Pufferstreekenabschnitt (41a; 41b) und vom Übernahmeabschnitt (45) in Förderrichtung (48a; 48b) zu einem der Ladegut-Hebevorrichtung (34a; 34b) benachbarten Übergabeabschnitt (46) gefördert wird, und dass
das zweite Ladegut (2) von der Transportvorrichtung (36a; 36b) zu einem der LadegutHebevorrichtung (34a; 34b) benachbarten Übernahmeabschnitt (49) und von diesem in Förderrichtung (52a; 52b) zu einem zur Ladegut-Hebevorrichtung (34a; 34b) entfernten Übergabeabschnitt (50) auf der Bereitstellfördervorrichtung (44) im zweiten Pufferstreckenabschnitt (42a; 42b) und danach durch das Einebenenregalbediengerät (3) vom Übergabeabschnitt (50) übernommen und zu einem Lagerplatz (17) gefördert wird.

13. Regallagersystem mit
Lagerregalen (12a, 12b), welche in übereinander liegenden Regalebenen (16) Lagerplätze (17) für Ladegüter (2) aufweisen, und
einer Ladegut-Manipulationseinheit (4; 4'; 4"), welche zumindest eine erste Ladegut-Hebevorrichtung (34a) mit einer heb- und senkbaren Transportvorrichtung (36a) zum Einlagern und Auslagern von Ladegütern (2) und eine erste Puffervorrichtung (35a) zum Zwischenspeichern von Ladegütern (2) auf deren Bereitstellfördervorrichtungen (43, 44) aufweist, und
zumindest einer zwischen den Lagerregalen (12a, 12b) und entlang der Ladegut-Hebevorrichtung (34a) sowie Puffervorrichtung (35a) verlaufenden Regalgasse (15), und
in Längsrichtung der Regalgasse (15) in zumindest einigen der Regalebenen (16) verlaufenden Führungsbahnen (20), und
zumindest einem entlang der Führungsbahnen (20) verfahrbaren Einebenenregalbediengerät (3) zum Transport von Ladegütern (2) zwischen den Lagerplätzen (17) und der Puffervorrichtung (35a) sowie
einer an die Ladegut-Hebevorrichtung (34a) angeschlossenen Fördertechnik (54a, 55a; 69, 71) mit einer ersten Fördertechnik (54a; 69) zum Antransport von Ladegütern (2) zu der Ladegut-Hebevorrichtung (34a) und einer zweiten Fördertechnik (55a; 71) zum Abtransport von Ladegütern (2) von der Ladegut-Hebevorrichtung (34a),
wobei die Puffervorrichtung (35a) zumindest in einigen der Regalebenen (16) ortsfest einen ersten Pufferstreckenabschnitt (41a) und zweiten Pufferstreckenabschnitt (42a) umfasst, in welchen die Bereitstellfördervorrichtungen (43, 44) angeordnet sind und zwischen welche die Transportvorrichtung (36a) der Ladegut-Hebevorrichtung (34a) vertikal positionierbar ist, und
wobei die Bereitstellfördervorrichtungen (43, 44) der ersten Puffervorrichtung (35a) in allen Regalebenen (16), in welchen diese angeordnet sind, jeweils eine die Ladegüter (2) mit einer einzigen und in dieselbe Förderrichtung (48a, 52a) fördernde Staubahn umfassen,
wobei der erste Pufferstreckenabschnitt (41a) mit den Bereitstellfördervorrichtungen (43) und der zweite Pufferstreckenabschnitt (42a) mit den Bereitstellfördervorrichtungen (44) relativ zur Regalgasse (15) vor und hinter der Ladegut-Hebevorrichtung (34a) sowie seitlich neben der Regalgasse (15) entlang der Führungsbahnen (20) vorgesehen sind, und
wobei der erste Pufferstreckenabschnitt (41a) ausschließlich einem Auslagervorgang für Ladegüter (2) und der zweite Pufferstreckenabschnitt (42a) ausschließlich einem Einlagervorgang für Ladegüter (2) dienen,
**dadurch gekennzeichnet, dass**
die Führungsbahnen (20) in Längsrichtung der Regalgasse (15) entlang der Lagerregale (12a, 12b), der Ladegut-Hebevorrichtung (34a) und der Puffervorrichtung (35a) verlaufen und dass auch die zwischen den Fördervorrichtungen (54a, 55a; 69, 71) und den Pufferstreckenabschnitten (41a, 42a) angeordnete Ladegut-Hebevorrichtung (34a) mit der heb- und senkbaren Transportvorrichtung (36a) zum Einlagern und Auslagern von Ladegütern (2) seitlich neben der Regalgasse (15) entlang der Führungsbahnen (20) vorgesehen ist, wobei
die Bereitstellfördervorrichtungen (43) im ersten Pufferstreckenabschnitt (41a) durch die Ladegüter (2) von dem zur Ladegut-Hebevorrichtung (34a) entfernten Übernahmeabschnitt (45) zu einem zur Ladegut-Hebevorrichtung (34a) benachbarten Übergabeabschnitt (46) in einer einzigen, nicht reversierbaren. Fördenichtung (48a) bewegende Staubahnen gebildet sind, wobei der Übernahmeabschnitt (45) vom Einebenenregalbediengerät (3) anfahrbar und ein Ladegut (2) vom Einebenenregalbediengerät (3) auf den Übernahmeabschnitt (45) umsetzbar ist, und wobei
die Bereitstellfördervorrichtungen (44) im zweiten Pufferstreckenabschnitt (42a) durch die Ladegüter (2) von einem zur Ladegut-Hebevorrichtung (34a) benachbarten Übernahmeabschnitt (49) zu dem zur Ladegut-Hebevorrichtung (34a) entfernten Übergabeabschnitt (50) in einer einzige, nicht reversierbaren. Förderrichtung (52a) bewegende Staubahnen gebildet sind, wobei der Übergabeabschnitt (50) vom Einebenenregalbediengerät (3) anfahrbar und ein Ladegut (2) vom Übergabeabschnitt (50) auf das Einebenenregalbediengerät (3) umsetzbar ist.

14. Regallagersystem nach Anspruch 13, **dadurch gekennzeichnet, dass** die Ladegut-Manipulationseinheit (4'; 4") ferner eine zweite Ladegut-Hebevorrichtung (34b) mit einer heb- und senkbaren Transportvorrichtung (36b) zum Einlagern und Auslagern von Ladegütern (2) und eine zweite Puffervorrichtung (35b) zum Zwischenspeichern von Ladegütern (2) auf deren Bereitstellfördervorrichtungen (43, 44) aufweist, welche entlang der Regalgasse (15) angeordnet ist und wobei an die zweite Ladegut-Hebevorrichtung (34b) eine Fördertechnik (54b, 55b; 69, 71) mit einer ersten Fördertechnik (54b; 69) zum Antransport von Ladegütern (2) zu der Ladegut-Hebevorrichtung (34b) und einer zweiten Fördertechnik (55b; 71) zum Abtransport von Ladegütern (2) von der Ladegut-Hebevorrichtung (34b) angeschlossen ist und wobei die Puffervorrichtung (35b) zumindest in einigen der Regalebenen (16) ortsfest einen ersten Pufferstreckenabschnitt (41b) und zweiten Pufferstreckenabschnitt (42b) umfasst, in welchen die Bereitstellfördervorrichtungen (43, 44) angeordnet sind und zwischen welche, die Transportvorrichtung (36b) der Ladegut-Hebevorrichtung (34b) vertikal positionierbar ist, und dass die Bereitstellfördervörrichtungen (43, 44) der zweiten Puffervorrichtung (36b) in allen Regalebenen (16), in welchen diese angeordnet sind, jeweils eine die Ladegüter (2) mit einer einzigen, nicht reversierbaren und in dieselbe Förderrichtung (48b, 52b) fördernde Staubahn umfassen.

15. Verfahren zum Betreiben eines gemäß den Ansprüchen 13 bis 14 ausgebildeten Regallagersystem, bei dem die Transportvorrichtung (36ä; 36b) der Ladegut-Hebevorrichtung (34a; 34b) zumindest in einigen der Regalebenen (16) zwischen einen ersten Pufferstreckenabschnitt (41a; 41b) und einen zweiten Pufferstreckenabschnitt (42a; 42b) positioniert wird und die Bereitstellfördervorrichtungen (43, 44) der ersten Puffervorrichtung (35a) in allen Regalebenen (16), in welchen diese angeordnet sind, mit einer einzigen, nicht reversierbaren und derselben Förderrichtung (48a; 48b; 52a; 52b) betrieben werden, sodass Ladegüter (2) auf den ersten Bereitstellfördervorrichtungen (43) in Richtung (48a; 48b) zur Ladegut-Hebevorrichtung (34a; 34b) hin gefördert und Ladegüter (2) auf den zweiten Bereitstellfördervorrichtungen (44) in Richtung (52a; 52b) von der Ladegut-Hebevorrichtung (34a; 34b) weg gefördert werden,
**dadurch gekennzeichnet, dass**
ein erstes Ladegut (2) durch das Einebenenregalbediengerät (3) von einem Lagerplatz (17) zu einem zur Ladegut-Hebevorrichtung (34a; 34b) entfernten Übernahmeabschnitt (45) auf der Bereitstellfördervorrichtung (43) im ersten Pufferstreckenabschnitt (41a; 41b) und vom Übernahmeabschnitt (45) in Förderrichtung (48a; 48b) zu einem der Ladegut-Hebevorrichtung (34a; 34b) benachbarten Übergabeabschnitt (46) gefördert wird, und dass
ein zweites Ladegut (2) von der Transportvorrichtung (36a; 36b) zu einem der Ladegut-Hebevorrichtung (34a; 34b) benachbarten Übernahmeabschnitt (49) und von diesem in Förderrichtung (52a; 52b) zu einem zur Ladegut-Hebevorrichtung (34a; 34b) entfernten Übergabeabschnitt (50) auf der Bereitstellfördervorrichtung (44) im zweiten Pufferstreckenabschnitt (42a; 42b) und danach durch das Einebenenregalbediengerät (3) vom Übergabeabschnitt (50) übernommen und zu einem Lagerplatz (17) gefördert wird.

## Claims

1. A rack storage system comprising
storage racks (12a, 12b), which have storage places (17) for loads (2) in rack levels (16) situated one above the other, and
a load manipulation unit (4; 4'; 4"), which has at least one first load-lifting device (34a), comprising a liftable and lowerable transport device (36a) for storing and retrieving loads (2), as well as a first buffer device (35a) for temporarily storing loads (2) on the provisioning conveyors (43, 44) thereof, and
at least one rack aisle (15) extending between the storage racks (12a, 12b) and along the load-lifting device (34a) and buffer device (35a), and
guide tracks (20) running in at least some of the rack levels (16) in longitudinal direction of the rack aisle (15), and
at least one single-level rack operating device (3), which can be displaced along the guide tracks (20) for transporting loads (2) between the storage places (17) and the buffer device (35a) as well as
a conveying system connected to the load-lifting device (34a), comprising a first conveying system (54a; 69) for transporting loads (2) to the load-lifting device (34a), and a second conveying system (55a; 71) for removing loads (2) from the load-lifting device (34a), wherein,
in at least some of the rack levels (16), the buffer device (35a) comprises a fixed first buffer path section (41a) and fixed second buffer path section (42a), in which the provisioning conveyors (43, 44) are arranged, and between which the transport device (36a) of the load-lifting device (34a) can be positioned at least in some of the rack levels (16) and driven in such a manner that at least a first load (2) can simultaneously be conveyed from the first buffer path section (41a) to the transport device (36a) and the transport device (36a) convey at least a second load (2) to the second buffer path section (42a),
wherein the first buffer path section (41a) comprising the provisioning conveyors (43) and the second buffer path section (42a) comprising the provisioning conveyors (44) are provided relative to the rack aisle (15) in front of and behind the load-lifting device (34a) as well as laterally next to the rack aisle (15) along the guide tracks (20), and
wherein the first buffer path section (41a) serves exclusively for a retrieval process for loads (2) and the second buffer path section (42a) serves exclusively for a storage process for loads (2),
**characterized in that**
the guide tracks (20) run in longitudinal direction of the rack aisle (15) along the storage racks (12a, 12b), the load-lifting device (34a) and the buffer device (35a) and that
the load-lifting device (34a) arranged between the conveying devices (54a, 55a; 69, 71) and the buffer path sections (41a, 42a) comprising the liftable and lowerable transport device (36a) for storing and retrieving loads (2) is also provided laterally next to the rack aisle (15) along the guide tracks (20), wherein
the provisioning conveyors (43) in the first buffer path section (41a) are provided in the form of accumulating tracks conveying the loads (2) from the pick-up section (45) remote from the load-lifting device (34a) to a transfer section (46) adjacent to the load-lifting device (34a) in one single, non-reversible conveying direction (48a), wherein the pick-up section (45) can be approached by the single-level rack serving device (3) and the single-level rack serving device (3) can relocate a load (2) to the pick-up section (45), and wherein
the provisioning conveyors (44) in the second buffer path section (42a) are provided in the form of accumulating tracks conveying the loads (2) from a pick-up section (49) adjacent to the load-lifting device (34a) to the transfer section (50) remote from the load-lifting device (34a) in one single, non-reversible conveying direction (52a), wherein the transfer section (50) can be approached by the single-level rack serving device (3) and the transfer section (50) can relocate a load (2) to the single-level rack serving device (3).

2. The rack storage system according to claim 1, **characterized in that** the load manipulation unit (4'; 4") further has a second load-lifting device (34b) comprising a liftable and lowerable transport device (36b) for storing and retrieving loads (2) and a second buffer device (35b) for temporarily storing loads (2) on the provisioning conveyors (43, 44) thereof, which is arranged along the rack aisle (15) and wherein a conveying system comprising a first conveying system (54b; 69) for transporting loads (2) to the load-lifting device (34b), and a second conveying system (55b; 71) for removing loads (2) from the load-lifting device (34b) is connected to the second load-lifting device (34b), and wherein in at least some of the rack levels (16), the buffer device (35b) comprises a fixed first buffer path section (41b) and fixed second buffer path section (42b), in which the provisioning conveyors (43, 44) are arranged, and between which the transport device (36b) of the load-lifting device (34b) can be positioned at least in some of the rack levels (16) and driven in such a manner that at least a first load (2) can simultaneously be conveyed from the first buffer path section (42b) to the transport device (36b) and the transport device (36b) can convey at least a second load (2) to the second buffer path section (42b),
wherein the first buffer path section (41b) comprising the provisioning conveyors (43) and the second buffer path section (42b) comprising the provisioning conveyors (44) are provided relative to the rack aisle (15) in front of and behind the load-lifting device (34b) as well as laterally next to the rack aisle (15) along the guide tracks (20) and
the first buffer path section (41b) serves exclusively for a removal process for loads (2) and the second buffer path section (42b) serves exclusively for a storage process for loads (2),
wherein the provisioning conveyors (43) in the first buffer path section (41b) are provided in the form of accumulating tracks conveying the loads (2) from a pick-up section (45) remote from the load-lifting device (34b) to a transfer section (46) adjacent to the load-lifting device (34b) in one single, non-reversible conveying direction (48b), wherein the pick-up section (45) can be approached by the single-level rack serving device (3) and the single-level rack serving device (3) can relocate the load (2) to the pick-up section (45), and
the provisioning conveyors (44) in the second buffer path section (42b) are provided in the form of accumulating tracks conveying the loads (2) from a pick-up section (49) adjacent to the load-lifting device (34b) to a transfer section (50) remote from the load-lifting device (34b) in one single, non-reversible conveying direction (52b), wherein the transfer section (50) can be approached by the single-level rack serving device (3) and the transfer section (50) can relocate the load (2) to the single-level rack serving device (3).

3. The rack storage system according to claim 1 or 2, **characterized in that** the accumulating tracks form at least one buffer section (47; 51) each situated between the pick-up place (45; 49) and the transfer place (46; 50).

4. The rack storage system according to claim 2, **characterized in that** the load-lifting devices (34a, 34b) are positioned at a distance at least corresponding to the width of an aisle and are arranged to be laterally reversed from one another.

5. The rack storage system according to claim 2, **characterized in that** the load-lifting devices (34a, 34b) are positioned at a distance at least corresponding to the width of an aisle and are arranged to be axially offset in the direction of the rack aisle (15).

6. The rack storage system according to claim 1 or 2, **characterized in that** the transport device (36a; 36b) of the load-lifting device (34a; 34b) can be positioned between the conveying devices (54a; 54b; 55a; 55b; 69, 71) located opposite one another and driven in such a manner that the first conveying device (54a; 54b; 69) can simultaneously convey at least a first load (2) to the transport device (36a; 36b) and the transport device (36a; 36b) can convey at least a second load (2) to the second conveying device (55a; 55b; 71).

7. The rack storage system according to claim 6, **characterized in that** the first conveying device (54a; 54b) for transporting loads (2) to the load-lifting device (34a; 34b) comprises conveying sections (58, 59) which extend in conveying system planes (56, 57) arranged one above the other and parallel with the rack aisle (15), and which are connected to one another via a transfer lifter (60).

8. The rack storage system according to claim 1 or 2, **characterized in that** the conveying system comprises a first conveying device (69) connected to the respective load-lifting device (34a; 34b) for transporting loads (2) to the load-lifting device (34a; 34b), and a second transport device (71) for removing loads (2) from the load-lifting device (34a; 34b), and a provisioning track (65) running in the rack aisle (15), as well as a delivery device (67) for transporting loads (2) from the provisioning track (65) onto the first conveying device (69).

9. The rack storage system according to claim 1 or 2, **characterized in that** the load manipulation unit (4; 4'; 4") is arranged at the front ends of the storage racks (12a, 12b).

10. The rack storage system according to claim 1 or 2, **characterized in that** the load manipulation unit (4; 4'; 4") is integrated in the storage racks (12a, 12b).

11. The rack storage system according to one of claims 2 to 10, **characterized in that** the first conveying device (54a; 69) for transporting loads (2) to the first load-lifting device (34a) and the second conveying device (55a; 71) for removing loads (2) from the first load-lifting device (34a) are connected to a first workstation and the first conveying device (54b; 69) for transporting loads (2) to the second load-lifting device (34b) and the second conveying device (55b; 71) for removing loads (2) from the second load-lifting device (34b) are connected to a second workstation.

12. A method for operating a rack storage system embodied according to claims 1 to 11, in the case of which at least in some of the rack levels (16), the transport device (36a; 36b) of the load-lifting device (34a; 34b) is positioned between a first buffer path section (41a; 41b) and a second buffer path section (42a; 42b) and is driven such that conveying of a first load (2) from the first buffer path section (41a; 41b) onto the transport device (36a; 36b) and of a second load (2) from the transport device (36a; 36b) onto the second buffer path section (42a; 42b) is carried out simultaneously,
**characterized in that**
the first load (2) is conveyed by the single-level rack serving device (3) from a storage place (17) to a pick-up section (45) which is in the first buffer path section (41a; 41b) on the provisioning conveyor (43) and remote from the load-lifting device (34a; 34b), and from the pick-up section (45) in conveying direction (48a; 48b) to a transfer section (46) adjacent to the load-lifting device (34a; 34b) and that
the second load (2) is conveyed by the transport device (36a; 36b) to a pick-up section (49) adjacent to the load-lifting device (34a; 34b) from where it is conveyed in conveying direction (52a; 52b) to a transfer section (50) remote from the load-lifting device (34a; 34b) on the provisioning conveyor (44) in the second buffer path section (42a; 42b), and afterwards picked up from the pick-up section (50) by the single-level rack serving device (3) and conveyed to a storage place (17).

13. A rack storage system comprising
storage racks (12a, 12b), which have storage places (17) for loads (2) in rack levels (16) situated one above the other, and
a load manipulation unit (4; 4'; 4"), which has at least one first load-lifting device (34a), comprising a liftable and lowerable transport device (36a) for storing and retrieving loads (2), and a first buffer device (35a) for temporarily storing loads (2) on the provisioning conveyors (43, 44) thereof, and
at least one rack aisle (15) extending between the storage racks (12a, 12b) and along the load-lifting device (34a) and buffer device (35a), and
guide tracks (20) running in at least some of the rack levels (16) in longitudinal direction of the rack aisle (15), and
at least one single-level rack operating device (3), which can be displaced along the guide tracks (20) for transporting loads (2) between the storage places (17) and the buffer device (35a) as well as
a conveying system (54a, 55a; 69, 71) connected to the load-lifting device (34a) comprising a first conveying system (54a; 69) for transporting loads (2) to the load-lifting device (34a), and a second conveying system (55a; 71) for removing loads (2) from the load-lifting device (34a),
wherein, in at least some of the rack levels (16), the buffer device (35a) comprises a fixed first buffer path section (41a) and fixed second buffer path section (42a), in which the provisioning conveyors (43, 44) are arranged, and between which the transport device (36a) of the load-lifting device (34a) can be positioned vertically, and
in all rack levels (16) where they are arranged in, the provisioning conveyors (43, 44) of the first buffer device (35a) each comprise a accumulating track conveying the loads (2) in only one and in the same conveying direction (48a, 52a).
wherein the first buffer path section (41a) comprising the provisioning conveyors (43) and the second buffer path section (42a) comprising the provisioning conveyors (44) are provided relative to the rack aisle (15) in front of and behind the load-lifting device (34a) as well as laterally next to the rack aisle (15) along the guide tracks (20), and
wherein the first buffer path section (41a) serves exclusively for a retrieval process for loads (2) and the second buffer path section (42a) serves exclusively for a storage process for loads (2),
**characterized in that**
the guide tracks (20) run in longitudinal direction of the rack aisle (15) along the storage racks (12a, 12b), the load-lifting device (34a) and the buffer device (35a) and that
the load-lifting device (34a) arranged between the conveying devices (54a, 55a; 69, 71) and the buffer path sections (41a, 42a) comprising the liftable and lowerable transport device (36a) for storing and retrieving loads (2) is also provided laterally next to the rack aisle (15) along the guide tracks (20), wherein
the provisioning conveyors (43) in the first buffer path section (41a) are provided in the form of accumulating tracks conveying the loads (2) from the pick-up section (45) remote from the load-lifting device (34a) to a transfer section (46) adjacent to the load-lifting device (34a) in one single, non-reversible conveying direction (48a), wherein the pick-up section (45) can be approached by the single-level rack serving device (3) and the single-level rack serving device (3) can relocate a load (2) to the pick-up section (45), and wherein
the provisioning conveyors (44) in the second buffer path section (42a) are provided in the form of accumulating tracks conveying the loads (2) from a pick-up section (49) adjacent to the load-lifting device (34a) to the transfer section (50) remote from the load-lifting device (34a) in one single, non-reversible conveying direction (52a), wherein the transfer section (50) can be approached by the single-level rack serving device (3) and the transfer section (50) can relocate the load (2) to the single-level rack serving device (3).

14. The rack storage system according to claim 13, **characterized in that** the load manipulation unit (4'; 4") further has a second load-lifting device (34b) comprising a liftable and lowerable transport device (36b) for storing and retrieving loads (2) and a second buffer device (35b) for temporarily storing loads (2) on the provisioning conveyors (43, 44) thereof, which is arranged along the rack aisle (15) and wherein a conveying system (54b, 55b; 69, 71) comprising a first conveying system (54b; 69) for transporting loads (2) to the load-lifting device (34b), and a second conveying system (55b; 71) for removing loads (2) from the load-lifting device (34b) is connected to the second load-lifting device (34b), and wherein in at least some of the rack levels (16), the buffer device (35b) comprises a fixed first buffer path section (41b) and fixed second buffer path section (42b), in which the provisioning conveyors (43, 44) are arranged, and between which the transport device (36b) of the load-lifting device (34b) can be positioned vertically, and that, in all rack levels (16) where they are arranged in, the provisioning conveyors (43, 44) of the second buffer device (36b) each comprise a accumulating track conveying the loads (2) in one single, non-reversible and in the same conveying direction (48b, 52b).

15. A method for operating a rack storage system embodied according to claims 13 to 14, in the case of which at least in some of the rack levels (16), the transport device (36a; 36b) of the load-lifting device (34a; 34b) is positioned between a first buffer path section (41 a; 41b) and a second buffer path section (42a; 42b) and in all rack levels (16) where they are arranged in, the provisioning conveyors (43, 44) of the first buffer device (35a) are operated with one single, non-reversible and identical conveying direction (48a; 48b; 52a; 52b), so that loads (2) on the first provisioning conveyors (43) are conveyed in the direction (48a; 48b) of the load-lifting device (34a; 34b) and loads (2) are conveyed on the second provisioning conveyors (44) in the direction (52a; 52b) away from the load-lifting device (34a; 34b),
**characterized in that**
a first load (2) is conveyed by the single-level rack serving device (3) from a storage place (17) to a pick-up section (45) which is in the first buffer path section (41a; 41b) on the provisioning conveyor (43) and remote from the load-lifting device (34a; 34b), and from the pick-up section (45) in conveying direction (48a; 48b) to a transfer section (46) adjacent to the load-lifting device (34a; 34b) and that
a second load (2) is conveyed by the transport device (36a; 36b) to a pick-up section (49) adjacent to the load-lifting device (34a; 34b) from where it is conveyed in conveying direction (52a; 52b) to a transfer section (50) remote from the load-lifting device (34a; 34b) on the provisioning conveyor (44) in the second buffer path section (42a; 42b), and afterwards picked up from the pick-up section (50) by the single-level rack serving device (3) and conveyed to a storage place (17).

## Revendications

1. Rayonnages d'emmagasinage (12a, 12b) qui présentent des emplacements d'emmagasinage (17) pour des marchandises chargées (2) sur des niveaux de rayonnage situés les uns au-dessus des autres (16), et
une unité de manipulation des marchandises chargées (4 ; 4' ; 4") qui présente au moins un premier dispositif de levage de marchandises chargées (34a) ayant un dispositif de transport pouvant être levé et abaissé (36a) pour l'emmagasinage et la sortie du magasin de marchandises chargées (2) et un premier dispositif tampon (35a) pour le stockage intermédiaire de marchandises chargées (2) sur ses dispositifs de déplacement de mise à disposition (43, 44), et
au moins une allée de rayonnages (15) s'étendant entre les rayonnages d'emmagasinage (12a, 12b) et le long du dispositif de levage des marchandises chargées (34a) ainsi que du dispositif tampon (35a), et
des pistes de guidage (20) s'étendant dans la direction longitudinale de l'allée de rayonnages (15) sur au moins certains des niveaux de rayonnage (16), et
au moins un transstockeur à un niveau (3) pouvant être déplacé le long de pistes de guidage (20) pour le transport de marchandises chargées (2) entre les emplacements d'emmagasinage (17) et le dispositif tampon (35a), ainsi
qu'un système de manutention rattaché au dispositif de levage de marchandises chargées (34a) ayant un premier convoyeur (54a ; 69) pour amener des marchandises chargées (2) au dispositif de levage de marchandises chargées (34a) et un deuxième convoyeur (55a ; 71) pour enlever des marchandises chargées (2) du dispositif de levage de marchandises chargées (34a),
le dispositif tampon (35a) comprenant au moins sur certains des niveaux de rayonnage (16), en position fixe, une première section de tronçon tampon (41a) et une deuxième section de tronçon tampon (42a) dans lesquelles les dispositifs de déplacement de mise à disposition (43, 44) sont agencés et entre lesquelles le dispositif de transport (36a) du dispositif de levage de marchandises chargées (34a) peut être positionné au moins sur certains des niveaux de rayonnage (16) et entraîné de telle sorte qu'en même temps, au moins une première marchandise chargée (2) peut être déplacée depuis la première section du tronçon tampon (41a) vers le dispositif de transport (36a) et au moins une deuxième marchandise chargée (2) peut être déplacée depuis le dispositif de transport (36a) vers la deuxième section du tronçon tampon (42a),
la première section du tronçon tampon (41a) avec les dispositifs de déplacement de mise à disposition (43) et la deuxième section du tronçon tampon (42a) avec les dispositifs de déplacement de mise à disposition (44) étant prévues, par rapport à l'allée de rayonnages (15), avant et après le dispositif de levage de marchandises chargées (34a) ainsi que latéralement, à côté de l'allée de rayonnages (15), le long des pistes de guidage (20), et
la première section du tronçon tampon (41a) servant uniquement à une opération de sortie du magasin de marchandises chargées (2) et la deuxième section du tronçon tampon (42a) servant uniquement à une opération d'emmagasinage de marchandises chargées (2),
**caractérisés en ce que**
les pistes de guidage (20) s'étendent dans la direction longitudinale de l'allée de rayonnages (15) le long des rayonnages d'emmagasinage (12a, 12b), du dispositif de levage de marchandises chargées (34a) et du dispositif tampon (35a), et **en ce que**
le dispositif de levage de marchandises chargées (34a) ayant le dispositif de transport pouvant être levé et abaissé (36a) pour l'emmagasinage et la sortie du magasin de marchandises chargées (2) et agencé entre les convoyeurs (54a, 55a ; 69, 71) et les sections du tronçon tampon (41a, 42a) est également prévu latéralement à côté de l'allée de rayonnages (15) le long des pistes de guidage (20),
les dispositifs de déplacement de mise à disposition (43) dans la première section du tronçon tampon (41a) étant formés par des pistes d'accumulation qui déplacent les marchandises chargées (2) dans un seul sens de déplacement (48a), qui ne peut être inversé, depuis la section de prise en charge (45) distante du dispositif de levage de marchandises chargées (34a) vers une section de remise (46) adjacente au dispositif de levage de marchandises chargées (34a), la section de prise en charge (45) pouvant être approchée par le transstockeur à un niveau (3) et une marchandise chargée (2) pouvant être transférée depuis le transstockeur à un niveau (3) vers la section de prise en charge (45), et
les dispositifs de déplacement de mise à disposition (44) dans la deuxième section du tronçon tampon (42a) étant formés par des pistes d'accumulation qui déplacent les marchandises chargées (2) dans un seul sens de déplacement (52a), qui ne peut être inversé, depuis une section de prise en charge (49) adjacente au dispositif de levage de marchandises chargées (34a) vers la section de remise (50) distante du dispositif de levage de marchandises chargées (34a), la section de remise (50) pouvant être approchée par le transstockeur à un niveau (3) et une marchandise chargée (2) pouvant être transférée depuis la section de remise (50) vers le transstockeur à un niveau (3).

2. Système d'emmagasinage à rayonnages selon la revendication 1, **caractérisé en ce que** l'unité de manipulation de marchandises chargées (4' ; 4") présente en outre un deuxième dispositif de levage de marchandises chargées (34b) ayant un dispositif de transport pouvant être levé et abaissé (36b) pour l'emmagasinage et la sortie du magasin de marchandises chargées (2) et un deuxième dispositif tampon (35b) pour le stockage intermédiaire de marchandises chargées (2) sur ses dispositifs de déplacement de mise à disposition (43, 44), qui est agencé le long de l'allée de rayonnages (15), un système de manutention ayant un premier convoyeur (54b ; 69) pour amener des marchandises chargées (2) au dispositif de levage de marchandises chargées (34b) et un deuxième convoyeur (55b ; 71) pour enlever des marchandises chargées (2) du dispositif de levage de marchandises chargées (34b) étant rattaché au deuxième dispositif de levage de marchandises chargées (34b) et le dispositif tampon (35b) comprenant au moins sur certains des niveaux de rayonnage (16), en position fixe, une première section de tronçon tampon (41b) et une deuxième section de tronçon tampon (42b) dans lesquelles les dispositifs de déplacement de mise à disposition (43, 44) sont agencés et entre lesquelles le dispositif de transport (36b) du dispositif de levage de marchandises chargées (34b) peut être positionné au moins sur certains des niveaux de rayonnage (16) et entraîné de telle sorte qu'en même temps, au moins une première marchandise chargée (2) peut être déplacée depuis la première section du tronçon tampon (41b) vers le dispositif de transport (36b) et au moins une deuxième marchandise chargée (2) peut être déplacée depuis le dispositif de transport (36b) vers la deuxième section du tronçon tampon (42b),
la première section du tronçon tampon (41b) avec les dispositifs de déplacement de mise à disposition (43) et la deuxième section du tronçon tampon (42b) avec les dispositifs de déplacement de mise à disposition (44) étant prévues, par rapport à l'allée de rayonnages (15), avant et après le dispositif de levage de marchandises chargées (34b) ainsi que latéralement, à côté de l'allée de rayonnages (15), le long des pistes de guidage (20), et
la première section du tronçon tampon (41b) servant uniquement à une opération de sortie du magasin de marchandises chargées (2) et la deuxième section du tronçon tampon (42b) servant uniquement à une opération d'emmagasinage de marchandises chargées (2),
les dispositifs de déplacement de mise à disposition (43) dans la première section du tronçon tampon (41b) étant formés par des pistes d'accumulation qui déplacent les marchandises chargées (2) dans un seul sens de déplacement (48b), qui ne peut être inversé, depuis une section de prise en charge (45) distante du dispositif de levage de marchandises chargées (34b) vers une section de remise (46) adjacente au dispositif de levage de marchandises chargées (34b), la section de prise en charge (45) pouvant être approchée par le transstockeur à un niveau (3) et une marchandise chargée (2) pouvant être transférée depuis le transstockeur à un niveau (3) vers la section de prise en charge (45), et
les dispositifs de déplacement de mise à disposition (44) dans la deuxième section du tronçon tampon (42b) étant formés par des pistes d'accumulation qui déplacent les marchandises chargées (2) dans un seul sens de déplacement (52b), qui ne peut être inversé, depuis une section de prise en charge (49) adjacente au dispositif de levage de marchandises chargées (34b) vers une section de remise (50) distante du dispositif de levage de marchandises chargées (34b), la section de remise (50) pouvant être approchée par le transstockeur à un niveau (3) et une marchandise chargée (2) pouvant être transférée depuis la section de remise (50) vers le transstockeur à un niveau (3).

3. Système d'emmagasinage à rayonnages selon la revendication 1 ou 2, **caractérisé en ce que** les pistes d'accumulation forment respectivement une section tampon (47 ; 51) entre l'emplacement de prise en charge (45 ; 49) et l'emplacement de remise (46 ; 50).

4. Système d'emmagasinage à rayonnages selon la revendication 2, **caractérisé en ce que** les dispositifs de levage de marchandises chargées (34a, 34b) sont installés au moins à une distance d'une largeur d'allée l'un de l'autre et se font face l'un à l'autre en symétrie.

5. Système d'emmagasinage à rayonnages selon la revendication 2, **caractérisé en ce que** les dispositifs de levage de marchandises chargées (34a, 34b) sont installés au moins à une distance d'une largeur d'allée l'un de l'autre et agencés en décalage axial dans la direction de l'allée de rayonnages (15).

6. Système d'emmagasinage à rayonnages selon la revendication 1 ou 2, **caractérisé en ce que** le dispositif de transport (36a ; 36b) du dispositif de levage de marchandises chargées (34a ; 34b) peut être positionné entre les convoyeurs situés l'un en face de l'autre (54a ; 54b ; 55a ; 55b ; 69, 71) et entraîné de telle sorte qu'en même temps, au moins une première marchandise chargée (2) peut être déplacée depuis le premier convoyeur (54a ; 54b ; 69) vers le dispositif de transport (36a ; 36b) et au moins une deuxième marchandise chargée (2) peut être déplacée depuis le dispositif de transport (36a ; 36b) vers le deuxième convoyeur (55a ; 55b ; 71).

7. Système d'emmagasinage à rayonnages selon la revendication 6, **caractérisé en ce que** le premier convoyeur (54a ; 54b) destiné à amener des marchandises chargées (2) au dispositif de levage de marchandises chargées (34a ; 34b) comprend des sections de déplacement (58, 59) s'étendant sur des niveaux du système de manutention situés l'un au-dessus de l'autre (56, 57) et parallèles à l'allée de rayonnages (15), qui sont reliées l'une à l'autre par le biais d'un élévateur de transfert (60).

8. Système d'emmagasinage à rayonnages selon la revendication 1 ou 2, **caractérisé en ce que** le système de manutention comprend un premier convoyeur (69) rattaché au dispositif de levage de marchandises chargées correspondant (34a ; 34b) destiné à amener des marchandises chargées (2) au dispositif de levage de marchandises chargées (34a ; 34b) et un deuxième convoyeur (71) destiné à enlever des marchandises chargées (2) du dispositif de levage de marchandises chargées (34a ; 34b) et une piste de mise à disposition (65) s'étendant dans l'allée de rayonnages (15) ainsi qu'un dispositif d'évacuation (67) destiné à transporter des marchandises chargées (2) depuis la piste de mise à disposition (65) vers le premier convoyeur (69).

9. Système d'emmagasinage à rayonnages selon la revendication 1 ou 2, **caractérisé en ce que** l'unité de manipulation de marchandises chargées (4 ; 4' ; 4") se rattache du côté frontal aux rayonnages d'emmagasinage (12a, 12b).

10. Système d'emmagasinage à rayonnages selon la revendication 1 ou 2, **caractérisé en ce que** l'unité de manipulation de marchandises chargées (4 ; 4' ; 4") est intégrée dans les rayonnages d'emmagasinage (12a, 12b).

11. Système d'emmagasinage à rayonnages selon l'une des revendications 2 à 10, **caractérisé en ce que** le premier convoyeur (54a ; 69) destiné à amener des marchandises chargées (2) au premier dispositif de levage de marchandises chargées (34a) et le deuxième convoyeur (55a ; 71) destiné à enlever des marchandises chargées (2) du premier dispositif de levage de marchandises chargées (34a) sont rattachés à un premier emplacement de travail et le premier convoyeur (54b ; 69) destiné à amener des marchandises chargées (2) au deuxième dispositif de levage de marchandises chargées (34b) et le deuxième convoyeur (55b ; 71) destiné à enlever des marchandises chargées (2) du deuxième dispositif de levage de marchandises chargées (34b) sont rattachés à un deuxième emplacement de travail.

12. Procédé de fonctionnement d'un système d'emmagasinage à rayonnages réalisé selon les revendications 1 à 11, dans lequel le dispositif de transport (36a ; 36b) du dispositif de levage de marchandises chargées (34a ; 34b) est positionné au moins sur certains des niveaux de rayonnage (16) entre une première section de tronçon tampon (41a ; 41b) et une deuxième section de tronçon tampon (42a ; 42b) et entraîné de telle sorte qu'en même temps, une première marchandise chargée (2) est déplacée depuis la première section du tronçon tampon (41a ; 41b) vers le dispositif de transport (36a ; 36b) et une deuxième marchandise chargée (2) est déplacée depuis le dispositif de transport (36a ; 36b) vers la deuxième section du tronçon tampon (42a ; 42b),
**caractérisé en ce que**
la première marchandise chargée (2) est déplacée au moyen du transstockeur à un niveau (3) depuis un emplacement d'emmagasinage (17) vers une section de prise en charge (45) distante du dispositif de levage de marchandises chargées (34a ; 34b) sur le dispositif de déplacement de mise à disposition (43) dans la première section du tronçon tampon (41a ; 41b) et depuis la section de prise en charge (45), dans le sens de déplacement (48a ; 48b), vers une section de remise (46) adjacente au dispositif de levage de marchandises chargées (34a ; 34b), et **en ce que**
la deuxième marchandise chargée (2) est transportée depuis le dispositif de transport (36a ; 36b) vers une section de prise en charge (49) adjacente au dispositif de levage de marchandises chargées (34a ; 34b) et depuis celle-ci, dans le sens de déplacement (52a ; 52b), vers une section de remise (50) distante du dispositif de levage de marchandises chargées (34a ; 34b) sur le dispositif de déplacement de mise à disposition (44) dans la deuxième section du tronçon tampon (42a ; 42b), et ensuite, prise en charge au moyen du transstockeur à un niveau (3) depuis la section de remise (50) et jusqu'à un emplacement d'emmagasinage (17).

13. Système d'emmagasinage à rayonnages ayant :
des rayonnages d'emmagasinage (12a, 12b) qui présentent des emplacements d'emmagasinage (17) pour des marchandises chargées (2) sur des niveaux de rayonnage situés les uns au-dessus des autres (16), et
une unité de manipulation des marchandises chargées (4 ; 4' ; 4") qui présente au moins un premier dispositif de levage de marchandises chargées (34a) ayant un dispositif de transport pouvant être levé et abaissé (36a) pour l'emmagasinage et la sortie du magasin de marchandises chargées (2) et un premier dispositif tampon (35a) pour le stockage intermédiaire de marchandises chargées (2) sur ses dispositifs de déplacement de mise à disposition (43, 44), et
au moins une allée de rayonnages (15) s'étendant entre les rayonnages d'emmagasinage (12a, 12b) et le long du dispositif de levage des marchandises chargées (34a) ainsi que du dispositif tampon (35a), et
des pistes de guidage (20) s'étendant dans la direction longitudinale de l'allée de rayonnages (15) sur au moins certains des niveaux de rayonnage (16), et
au moins un transstockeur à un niveau (3) pouvant être déplacé le long de pistes de guidage (20) pour le transport de marchandises chargées (2) entre les emplacements d'emmagasinage (17) et le dispositif tampon (35a), ainsi
qu'un système de manutention (54a, 55a ; 69, 71) rattaché au dispositif de levage de marchandises chargées (34a) ayant un premier convoyeur (54a ; 69) pour amener des marchandises chargées (2) au dispositif de levage de marchandises chargées (34a) et un deuxième convoyeur (55a ; 71) pour enlever des marchandises chargées (2) du dispositif de levage de marchandises chargées (34a),
le dispositif tampon (35a) comprenant au moins sur certains des niveaux de rayonnage (16), en position fixe, une première section de tronçon tampon (41a) et une deuxième section de tronçon tampon (42a) dans lesquelles les dispositifs de déplacement de mise à disposition (43, 44) sont agencés et entre lesquelles le dispositif de transport (36a) du dispositif de levage de marchandises chargées (34a) peut être positionné verticalement, et
les dispositifs de déplacement de mise à disposition (43, 44) du premier dispositif tampon (35a) comprenant respectivement, sur tous les niveaux de rayonnage (16) dans lesquels ils sont agencés, une piste d'accumulation déplaçant les marchandises chargées (2) dans un seul et même sens de déplacement (48a, 52a),
la première section du tronçon tampon (41a) avec les dispositifs de déplacement de mise à disposition (43) et la deuxième section du tronçon tampon (42a) avec les dispositifs de déplacement de mise à disposition (44) étant prévues, par rapport à l'allée de rayonnages (15), avant et après le dispositif de levage de marchandises chargées (34a) ainsi que latéralement, à côté de l'allée de rayonnages (15), le long des pistes de guidage (20), et
la première section du tronçon tampon (41a) servant uniquement à une opération de sortie du magasin de marchandises chargées (2) et la deuxième section du tronçon tampon (42a) servant uniquement à une opération d'emmagasinage de marchandises chargées (2),
**caractérisé en ce que**
les pistes de guidage (20) s'étendent dans la direction longitudinale de l'allée de rayonnages (15) le long des rayonnages d'emmagasinage (12a, 12b), du dispositif de levage de marchandises chargées (34a) et du dispositif tampon (35a), et **en ce que**
le dispositif de levage de marchandises chargées (34a) ayant le dispositif de transport pouvant être levé et abaissé (36a) pour l'emmagasinage et la sortie du magasin de marchandises chargées (2) et agencé entre les convoyeurs (54a, 55a ; 69, 71) et les sections du tronçon tampon (41a, 42a) est également prévu latéralement à côté de l'allée de rayonnages (15) le long des pistes de guidage (20),
les dispositifs de déplacement de mise à disposition (43) dans la première section du tronçon tampon (41a) étant formés par des pistes d'accumulation qui déplacent les marchandises chargées (2) dans un seul sens de déplacement (48a), qui ne peut être inversé, depuis la section de prise en charge (45) distante du dispositif de levage de marchandises chargées (34a) vers une section de remise (46) adjacente au dispositif de levage de marchandises chargées (34a), la section de prise en charge (45) pouvant être approchée par le transstockeur à un niveau (3) et une marchandise chargée (2) pouvant être transférée depuis le transstockeur à un niveau (3) vers la section de prise en charge (45), et
les dispositifs de déplacement de mise à disposition (44) dans la deuxième section du tronçon tampon (42a) étant formés par des pistes d'accumulation qui déplacent les marchandises chargées (2) dans un seul sens de déplacement (52a), qui ne peut être inversé, depuis une section de prise en charge (49) adjacente au dispositif de levage de marchandises chargées (34a) vers la section de remise (50) distante du dispositif de levage de marchandises chargées (34a), la section de remise (50) pouvant être approchée par le transstockeur à un niveau (3) et une marchandise chargée (2) pouvant être transférée depuis la section de remise (50) vers le transstockeur à un niveau (3).

14. Système d'emmagasinage à rayonnages selon la revendication 13, **caractérisé en ce que** l'unité de manipulation de marchandises chargées (4' ; 4") présente en outre un deuxième dispositif de levage de marchandises chargées (34b) ayant un dispositif de transport pouvant être levé et abaissé (36b) pour l'emmagasinage et la sortie du magasin de marchandises chargées (2) et un deuxième dispositif tampon (35b) pour le stockage intermédiaire de marchandises chargées (2) sur ses dispositifs de déplacement de mise à disposition (43, 44), qui est agencé le long de l'allée de rayonnages (15), un système de manutention (54b, 55b ; 69, 71) ayant un premier convoyeur (54b ; 69) pour amener des marchandises chargées (2) au dispositif de levage de marchandises chargées (34b) et un deuxième convoyeur (55b ; 71) pour enlever des marchandises chargées (2) du dispositif de levage de marchandises chargées (34b) étant rattaché au deuxième dispositif de levage de marchandises chargées (34b) et le dispositif tampon (35b) comprenant au moins sur certains des niveaux de rayonnage (16), en position fixe, une première section de tronçon tampon (41b) et une deuxième section de tronçon tampon (42b) dans lesquelles les dispositifs de déplacement de mise à disposition (43, 44) sont agencés et entre lesquelles le dispositif de transport (36b) du dispositif de levage de marchandises chargées (34b) peut être positionné verticalement, et **en ce que** les dispositifs de déplacement de mise à disposition (43, 44) du deuxième dispositif tampon (36b) comprennent respectivement, sur tous les niveaux de rayonnage (16) dans lesquels ils sont agencés, une piste d'accumulation déplaçant les marchandises chargées (2) dans un seul et même sens de déplacement (48b, 52b), qui ne peut être inversé.

15. Procédé de fonctionnement d'un système d'emmagasinage à rayonnages réalisé selon les revendications 13 à 14, dans lequel le dispositif de transport (36a ; 36b) du dispositif de levage de marchandises chargées (34a ; 34b) est positionné au moins sur certains des niveaux de rayonnage (16) entre une première section de tronçon tampon (41a ; 41b) et une deuxième section de tronçon tampon (42a ; 42b) et les dispositifs de déplacement de mise à disposition (43, 44) du premier dispositif tampon (35a) sont entraînés, sur tous les niveaux de rayonnage (16) dans lesquels ils sont agencés, dans un seul et même sens de déplacement (48a ; 48b ; 52a ; 52b), qui ne peut être inversé, de telle sorte que des marchandises chargées (2) sont déplacées sur les premiers dispositifs de déplacement de mise à disposition (43) dans le sens (48a ; 48b) menant vers le dispositif de levage de marchandises chargées (34a ; 34b) et des marchandises chargées (2) sont déplacées sur les deuxièmes dispositifs de déplacement de mise à disposition (44) dans le sens (52a ; 52b) opposé au dispositif de levage de marchandises chargées (34a ; 34b),
**caractérisé en ce**
**qu'**une première marchandise chargée (2) est déplacée au moyen du transstockeur à un niveau (3) depuis un emplacement d'emmagasinage (17) vers une section de prise en charge (45) distante du dispositif de levage de marchandises chargées (34a ; 34b) sur le dispositif de déplacement de mise à disposition (43) dans la première section du tronçon tampon (41a ; 41b) et depuis la section de prise en charge (45), dans le sens de déplacement (48a ; 48b), vers une section de remise (46) adjacente au dispositif de levage de marchandises chargées (34a ; 34b), et en ce
**qu'**une deuxième marchandise chargée (2) est transportée depuis le dispositif de transport (36a ; 36b) vers une section de prise en charge (49) adjacente au dispositif de levage de marchandises chargées (34a ; 34b) et depuis celle-ci, dans le sens de déplacement (52a ; 52b), vers une section de remise (50) distante du dispositif de levage de marchandises chargées (34a ; 34b) sur le dispositif de déplacement de mise à disposition (44) dans la deuxième section du tronçon tampon (42a ; 42b), et ensuite, prise en charge au moyen du transstockeur à un niveau (3) depuis la section de remise (50) et jusqu'à un emplacement d'emmagasinage (17).
